(19) Europäisches Patentamt / European Patent Office / Office européen des brevets

(11) **EP 4 385 609 A1**

(12) **EUROPEAN PATENT APPLICATION**
published in accordance with Art. 153(4) EPC

(43) Date of publication:
**19.06.2024 Bulletin 2024/25**

(21) Application number: **22855843.3**

(22) Date of filing: **04.08.2022**

(51) International Patent Classification (IPC):
**B01D 61/02** (2006.01)    **B01D 63/02** (2006.01)
**B01D 69/08** (2006.01)    **B01D 71/56** (2006.01)
**C08J 5/22** (2006.01)

(52) Cooperative Patent Classification (CPC):
**B01D 61/02; B01D 63/02; B01D 69/08;
B01D 71/56; C08J 5/22**

(86) International application number:
**PCT/JP2022/029976**

(87) International publication number:
**WO 2023/017781 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.08.2021 JP 2021131721**

(71) Applicant: **Unitika Ltd.**
**Osaka-shi, Osaka 541-8566 (JP)**

(72) Inventors:
  • **ANDO, Hidehito**
    **Uji-shi, Kyoto 611-0021 (JP)**
  • **TANAKA, Jun**
    **Uji-shi, Kyoto 611-0021 (JP)**
  • **NAKAMURA, Ryota**
    **Uji-shi, Kyoto 611-0021 (JP)**
  • **UMAKOSHI, Kyohei**
    **Uji-shi, Kyoto 611-0021 (JP)**
  • **MAEDA, Keisuke**
    **Uji-shi, Kyoto 611-0021 (JP)**
  • **ONO, Takahiro**
    **Uji-shi, Kyoto 611-0021 (JP)**
  • **MASAKI, Tatsunori**
    **Uji-shi, Kyoto 611-0021 (JP)**

(74) Representative: **Müller-Boré & Partner
Patentanwälte PartG mbB
Friedenheimer Brücke 21
80639 München (DE)**

(54) **POLYAMIDE POROUS MEMBRANE AND METHOD FOR PRODUCING POLYAMIDE POROUS MEMBRANE**

(57)    The purpose of the present invention is to provide a polyamide porous membrane that makes it possible to improve liquid permeability while suppressing deterioration of membrane separation performance. A polyamide porous membrane according to the present invention is formed from a polyamide resin, wherein in structural analysis by X-ray diffraction, the ratio of $\gamma$ crystals with respect to the total amount of $\alpha$ crystals and $\gamma$ crystals is not less than 38%.

FIG. 3

EP 4 385 609 A1

**Description**

TECHNICAL FIELD

The present invention relates to a polyamide porous membrane and a method for producing a polyamide porous membrane.

BACKGROUND ART

A porous membrane is generally produced by extruding a polymer solution as a membrane-forming stock solution from a spinneret having a specific shape and then solidifying and drying the polymer solution. Porous membranes have been increasingly used in many industrial fields such as semiconductor industrial fields as microfiltration, ultrafiltration, or nanofiltration applications of liquids, water treatment fields such as drinking water production and service water and sewerage treatment, medical fields such as blood purification, pharmaceutical fields such as virus removal, and food industrial fields, and porous membranes having various pore sizes have been developed.

In the evaluation of a microfiltration membrane, an ultrafiltration membrane, and a nanofiltration membrane, the measurement of liquid permeability (water permeation amount in the case of water) or a bubble point test, a solute rejection rate, or a molecular weight cutoff is mainly used depending on the type of the membrane. The bubble point test is a common method for measuring the maximum pore size of a membrane. The solute rejection rate evaluates how much rejection rate can be obtained for an arbitrary solute. The molecular weight cutoff represents the size range of the pores of the membrane and is an indirect reference for the rejection rate.

The molecular weight cutoff is determined by a permeation test using a standard substance having a known molecular weight. Usually, the molecular weight cutoff is determined by the lower limit of the size (in daltons) of molecules that are is retained at a rate of 90% or more in the permeation test. In general, an ultrafiltration membrane has a molecular weight cutoff of about 1,000 to 1,000,000 Da, and a nanofiltration membrane has a molecular weight cutoff of about 200 to 1,000 Da.

Specifically, the bubble point test is a test in which an air pressure is applied to a membrane after the membrane is wetted with an organic solvent such as 2-propanol, and an air pressure (bubble point) when bubbles are generated from the membrane is measured. The higher the bubble point, the smaller the maximum pore size of the membrane.

In the bubble point test defined in JIS K 3832, the pore size can be calculated from the surface tension of the liquid to be used and the bubble point by the following formula.

$$d = 4B\gamma/P$$

d: Pore size
B: Capillary constant
$\gamma$: Surface tension of liquid
P: Bubble point pressure

In the bubble point test, first, the membrane to be measured is sufficiently wetted with a liquid to be used, and in the case of a porous membrane, for example, the pressure is gradually increased with air or nitrogen gas from the inner surface of the membrane, and the pressure at which bubbles are generated from the outer surface of the membrane is measured. Bubbles are first generated from the largest pore of the membrane, and then bubbles are uniformly generated from the entire membrane as the pressure increases. The pressure at the time when bubbles start to be generated is referred to as an initial bubble point, and the pressure at the time when bubbles are generated from the whole is referred to as a burst bubble point.

Conventionally, as a material of porous filtration membranes, polyolefins (polyethylene, polypropylene, etc.), polyvinylidene fluoride, polysulfones, polyethersulfone, polyacrylonitrile, cellulose acetate, and the like are often used (see, for example, Patent Documents 1 to 3). However, polyolefins, polyvinylidene fluoride, polysulfones, polyethersulfone, and the like have strong hydrophobicity and therefore need to be subjected to a wetting treatment before use, and further have a problem of low water permeation amount.

Therefore, conventionally, a method for producing a porous filtration membrane by the TIPS method using a polyamide resin having relatively high hydrophilicity has been studied. For example, Patent Document 4 discloses a polyamide porous membrane formed of a polyamide resin, in which the initial bubble point is 0.40 MPa or more and the burst bubble point is 0.55 MPa or more in a bubble point test in which air pressure is applied in a liquid having a surface tension of 12 mN/m at 20°C, and an internal pressure water permeation amount using pure water at 25°C is 50 L/(m²·atm·h) or more.

PRIOR ART DOCUMENTS

PATENT DOCUMENTS

Patent Document 1: Japanese Patent Laid-open Publication No. 2009-226338
Patent Document 2: Japanese Patent Laid-open Publication No. 2014-218563
Patent Document 3: Japanese Patent Laid-open Publication No. 2007-7490
Patent Document 4: Japanese Patent Laid-open Publication No. 2016-068005

SUMMARY OF THE INVENTION

PROBLEMS TO BE SOLVED BY THE INVENTION

However, the polyamide porous membrane described in Patent Document 4 also does not have sufficiently satisfactory water permeability, and further improvement of water permeability is required.

The present invention has been made in view of the above problems, and a main object thereof is to provide a polyamide porous membrane having improved liquid permeability while suppressing deterioration in membrane separation performance, and a method for producing the same.

MEANS FOR SOLVING THE PROBLEM

In order to solve the above problems, the present inventors have focused on a crystal structure of a polyamide resin for forming a polyamide porous membrane. The present inventors have found that a polyamide porous membrane in which the ratio of $\gamma$ crystals to the total amount of $\alpha$ crystals ($\alpha$-type crystals) and $\gamma$ crystals ($\gamma$-type crystals) is 38% or more can improve liquid permeability while suppressing deterioration of membrane separation performance. The present inventors have found that the polyamide porous membrane can be obtained by using, as a membrane-forming stock solution, a solution containing a polyamide resin, sulfolane, and dimethyl sulfone and having a mass ratio of sulfolane and dimethyl sulfone (dimethyl sulfone/sulfolane) of 0.8 to 2.5, in a method for forming a polyamide porous membrane from a membrane-forming stock solution containing a polyamide resin, using the thermally-induced phase separation method (TIPS method) and the non-solvent-induced phase separation method (NIPS method) in combination. The present invention has been completed by further conducting studies based on this finding.

That is, the present invention provides the invention of the following aspects.

Item 1. A polyamide porous membrane formed of a polyamide resin, in which in structural analysis by X-ray diffraction, a ratio of a $\gamma$ crystal to a total amount of an $\alpha$ crystal and the $\gamma$ crystal is 38% or more.

Item 2. The polyamide porous membrane according to item 1, in which crystallinity of the $\gamma$ crystal is 20 to 50% in structural analysis by X-ray diffraction.

Item 3. The polyamide porous membrane according to item 1 or 2, in which a ratio of the $\gamma$ crystal to all crystals is 34 to 70% in structural analysis by X-ray diffraction.

Item 4. The polyamide porous membrane according to any one of items 1 to 3, in which the polyamide porous membrane has a hollow fiber membrane shape.

Item 5. The polyamide porous membrane according to any one of items 1 to 4, in which the polyamide resin is polyamide 6.

Item 6. A filtration membrane module including the polyamide porous membrane according to any one of items 1 to 5 housed in a module case.

Item 7. A method for producing a polyamide porous membrane, including a first step and a second step below:

the first step of preparing a membrane-forming stock solution by dissolving a polyamide resin at a temperature of 100°C or higher in an organic solvent containing sulfolane and dimethyl sulfone and having a mass ratio of dimethyl sulfone to sulfolane (dimethyl sulfone/sulfolane) of 0.8 to 2.5; and
the second step of extruding the membrane-forming stock solution into a coagulation bath at 100°C or lower in a predetermined shape to coagulate the polyamide resin into a membrane shape.

Item 8. The production method according to item 7 used as a method for producing a polyamide porous membrane having a hollow fiber membrane shape,

in which the second step is a step of using a double-tube nozzle having a double tube structure for producing a hollow fiber, discharging an internal coagulation liquid from an inner nozzle while discharging the membrane-forming stock solution from an outer annular nozzle, and immersing the membrane-forming stock solution in the coagulation bath, and

a coagulation liquid having compatibility with the organic solvent used in the membrane-forming stock solution and low affinity with the polyamide resin is used for at least one of the internal coagulation liquid and the coagulation bath.

## ADVANTAGES OF THE INVENTION

The polyamide porous membrane of the present invention can improve liquid permeability while suppressing a decrease in membrane separation performance by maintaining the bubble point, the solute rejection rate, or the molecular weight cutoff, and thus can achieve improvement in productivity, energy saving, and cost reduction of production processes in various industries.

## BRIEF DESCRIPTION OF THE DRAWINGS

Fig. 1a is a schematic diagram of a module used for measuring a water permeation amount, and Fig. 1b is a schematic diagram of a device used for measuring a water permeation amount.

Fig. 2 is a schematic diagram of a device used for measuring a bubble point.

Fig. 3 shows, for each of polyamide hollow fiber porous membranes of Examples 1 to 3 and Comparative Examples 1 and 2, a diagram obtained by plotting the mass ratio of dimethyl sulfone to sulfolane (DMS/SFL) in a membrane-forming stock solution used as a horizontal axis and plotting the ratio of $\gamma$ crystals to the total amount of $\alpha$ crystals and $\gamma$ crystals and the water permeation amount of each polyamide hollow fiber porous membrane as a vertical axis.

Fig. 4 is a schematic diagram of a device used for measuring a vitamin $B_{12}$ (VB12) rejection rate, an NMP permeation amount, and a molecular weight cutoff of a hollow fiber porous membrane.

## EMBODIMENT OF THE INVENTION

## 1. Polyamide Porous Membrane

A polyamide porous membrane of the present invention is a polyamide porous membrane formed of a polyamide resin, in which in structural analysis by X-ray diffraction, the ratio of $\gamma$ crystals to the total amount of $\alpha$ crystals and the $\gamma$ crystals is 38% or more. Hereinafter, the polyamide porous membrane of the present invention will be described in detail.

[Type of Membrane]

The type of the polyamide porous membrane of the present invention is not particularly limited, and examples thereof include a microfiltration membrane, an ultrafiltration membrane, and a nanofiltration membrane. The microfiltration membrane is generally a separation membrane that rejects particles of several tens of nanometers or more, and is used for removal of suspended substances such as bacteria, removal of ultrafine particles, removal of viruses and bacteria, aseptic filtration of wine and beer, production of ultrapure water for semiconductor production, and the like.

The ultrafiltration membrane is generally a separation membrane that rejects particles of 0.1 $\mu$m or less and dissolved polymers, and is used for removal of proteins, enzymes, bacteria, and colloidal polymers, wastewater treatment in the fiber, paper, and pulp industry, production of industrial ultrapure water, and the like. The nanofiltration membrane is generally a liquid separation membrane that rejects dissolved substances having a molecular weight of less than 1,000 Da, and is used for removal of hardness components, removal of sulfate ions, removal of scale components in seawater desalination, and the like.

[Constituent Material]

The polyamide porous membrane of the present invention is formed of a polyamide resin. The polyamide porous membrane of the present invention can have resistance to a wide range of organic solvents by using a polyamide resin as a constituent resin.

The type of the polyamide resin used as the constituent resin is not particularly limited, and examples thereof include a homopolymer of a polyamide, a copolymer of a polyamide, and a mixture thereof. Specific examples of the homopolymer of a polyamide include polyamide 6, polyamide 66, polyamide 46, polyamide 610, polyamide 612, polyamide 11, polyamide 12, polyamide MXD6, polyamide 4T, polyamide 6T, polyamide 9T, and polyamide 10T. Specific examples of the copolymer of a polyamide include copolymers of a polyamide and a polyether such as polytetramethylene glycol and polyethylene glycol. The ratio of the polyamide component in the copolymer of a polyamide is not particularly limited, but for example, the ratio of the polyamide component is preferably 70 mol% or more, more preferably 80 mol% or more. When the ratio of the polyamide component in the copolymer of a polyamide satisfies the above range, better organic solvent resistance can be imparted.

Whether the polyamide resin to be used as the constituent resin is crosslinked does not matter, but one that is not crosslinked is preferable from the viewpoint of reducing the production cost.

The relative viscosity of the polyamide resin is not particularly limited but is, for example, 2.0 to 7.0, preferably 2.5 to 6.0, more preferably 3.0 to 5.0. With such a relative viscosity, moldability and controllability of phase separation are improved during production of the polyamide porous membrane, and good shape stability can be imparted to the polyamide porous membrane. Here, the relative viscosity refers to a value measured with an Ubbelohde viscometer at 25°C using a solution obtained by dissolving 1 g of the polyamide resin in 100 mL of 96% sulfuric acid.

In the present invention, the polyamide resin used as the constituent resin may be used singly, or may be used in combination of two or more types thereof.

Among these polyamide resins, polyamide 6 easily satisfies the characteristics of the crystal structure defined in the present invention and easily achieves both the maintenance of the bubble point, the solute rejection rate, or the molecular weight cutoff and the improvement of the liquid permeability in a suitable manner, and thus is suitable as the constituent resin of the polyamide porous membrane of the present invention.

In addition to the polyamide resin, the polyamide porous membrane of the present invention may contain a filler as necessary as long as the effect of the present invention is not impaired. By containing the filler, the strength, elongation, and elastic modulus of the polyamide porous membrane can be improved. In particular, by containing the filler, an effect that the polyamide porous membrane is hardly deformed even when a high pressure is applied during filtration is also obtained. The type of the filler to be added is not particularly limited, and examples thereof include fibrous fillers such as glass fibers, carbon fibers, potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers, and metal fibers; silicates such as talc, hydrotalcite, wollastonite, zeolite, sericite, mica, kaolin, clay, pyrophyllite, bentonite, asbestos, and alumina silicate; metal compounds such as silicon oxide, magnesium oxide, alumina, zirconium oxide, titanium oxide, and iron oxide; carbonates such as calcium carbonate, magnesium carbonate, and dolomite; sulfates such as calcium sulfate and barium sulfate; metal hydroxides such as calcium hydroxide, magnesium hydroxide, and aluminum hydroxide; and inorganic materials such as non-fibrous fillers such as glass beads, glass flakes, glass powder, ceramic beads, boron nitride, silicon carbide, carbon black, silica, and graphite. These fillers may be used singly or in combination of two or more thereof. Among these fillers, talc, hydrotalcite, silica, clay, and titanium oxide are preferable, and talc and clay are more preferable. The content of the filler is not particularly limited but is, for example, 5 to 100 parts by mass, preferably 10 to 75 parts by mass, more preferably 25 to 50 parts by mass per 100 parts by mass of the polyamide resin. By containing the filler in such a content, the strength, elongation, and elastic modulus of the polyamide porous membrane can be improved.

The polyamide porous membrane of the present invention may contain additives such as a thickener, an antioxidant, a surface modifier, a lubricant, and a surfactant as necessary for controlling the pore size and improving the membrane performance.

[Characteristic of Crystal Structure]

In the polyamide porous membrane according to the present invention, in crystal structure analysis by X-ray diffraction, the ratio of $\gamma$ crystals with respect to the total amount of $\alpha$ crystals and $\gamma$ crystals is 38% or more. By satisfying such a ratio of $\gamma$ crystals, it is possible to improve liquid permeability while maintaining the bubble point, the solute rejection rate, or the molecular weight cutoff. In the polyamide porous membrane of the present invention, the ratio of $\gamma$ crystals to the total amount of $\alpha$ crystals and $\gamma$ crystals is preferably 38 to 75%, more preferably 38 to 70%, still more preferably 38 to 60%, particularly preferably 38 to 50%, still more preferably 40 to 45% from the viewpoint of suitably achieving both the maintenance of the bubble point, the solute rejection rate, or the molecular weight cutoff and the improvement of the liquid permeability. As one embodiment of the polyamide porous membrane of the present invention, in the case of a microfiltration membrane, the ratio of $\gamma$ crystals to the total amount of $\alpha$ crystals and $\gamma$ crystals is preferably 38 to 60%, more preferably 38 to 50%, still more preferably 40 to 45% from the viewpoint of suitably achieving both the maintenance of the bubble point and the improvement of liquid permeability. As one embodiment of the polyamide porous membrane of the present invention, in the case of an ultrafiltration membrane or a nanofiltration membrane, the ratio of $\gamma$ crystals to the total amount of $\alpha$ crystals and $\gamma$ crystals is preferably 50 to 75%, more preferably 55 to 75%, still more preferably 55 to 70%, particularly preferably 60 to 70% from the viewpoint of suitably achieving both the maintenance of the solute rejection rate or the molecular weight cutoff and the improvement of liquid permeability.

In the present invention, the ratio of $\gamma$ crystals to the total amount of $\alpha$ crystals and $\gamma$ crystals is a value determined by determining the peak area of $\alpha$ crystals and the peak area of $\gamma$ crystals by crystal structure analysis by X-ray diffraction and calculating the ratio of the peak area of $\gamma$ crystals to the total value of the peak area of $\alpha$ crystals and the peak area of $\gamma$ crystals. Specifically, the ratio of $\gamma$ crystals to the total amount of $\alpha$ crystals and the $\gamma$ crystals is a value measured by the following method under the following conditions using an X-ray diffractometer.

- <u>Pretreatment</u>: A piece of a hollow fiber porous membrane is cut out perpendicularly to the length direction and fixed to a sample plate for pole measurement with double-sided tape. The sample plate for pole measurement is disposed so as to be parallel to the optical axis direction when the length direction of the sample is $2\theta = 0°$.
- <u>Measurement Method</u>: The WAXD in the reflection mode by the $2\theta/\theta$ method is adopted.
- <u>Measurement Conditions</u>: Conditions are set to Cu K$\alpha$ X-rays (1.54 Å), 50 kV and 300 mA, a thin film, a standard multi-purpose sample stage/a sample plate for pole measurement, the parallel beam method, long slits for receiving-side Soller slits, slits: DS/SS/RS = 1.0 mm/1.0 mm/1.0 mm, longitudinal limiting slit = 10 mm, scan range: $2\theta = 2°$ to 60°, scan speed: 2°/min, and step: 0.02°.
- <u>Analysis Method</u>: Analysis is performed in the range of $2\theta = 5°$ to 36° by the multiple peak separation method (profile fitting with the pseudo-Voigt function). Specific analysis conditions are as follows.

1) The background is defined as an area under a straight line connecting a corrected intensity at $2\theta = 8°$ (calculated as the average intensity at $2\theta = 7.5°$ to 8.5°) and a corrected intensity at $2\theta = 36°$ (calculated as the average intensity at $2\theta = 35.5°$ to 36.5°).
2) To the halo pattern formed by the amorphous component, a Gaussian function in contact with the peak shape at $2\theta = 15$ to 17 ° and $2\theta = 27$ to 29° is assigned. At this time, the center of the halo pattern is set to $2\theta = 19$ to 21°, and the full width at half maximum is set to about 10.
3) To the diffraction line formed by the crystal component, a symmetric pseudo-Voigt function is assigned to match the peak top and the waveform. Profile fitting is performed with the parameters of the halo pattern being fixed. The $2\theta$ position, the half-value width, the height, and the contribution ratio between the Gaussian function and the Lorentz function of the peak are set by fitting. Jade+ 9.8 is used for fitting.
4) The peak area of the crystalline portion, the peak area of $\alpha$ crystals, and the peak area of $\gamma$ crystals are determined by the multiple peak separation method, and the ratio of $\gamma$ crystals to the total amount of $\alpha$ crystals and $\gamma$ crystals is calculated according to the following calculation formula.

[Math. 1]

$$\text{Ratio of } \gamma \text{ crystals to total amount of } \alpha \text{ crystals and } \gamma \text{ crystals (\%)}$$

$$= \{\text{peak area of } \gamma \text{ crystals}/(\text{peak area of } \gamma \text{ crystals} + \text{peak area of } \alpha \text{ crystals}\} \times 100$$

[0029]

In the polyamide porous membrane of the present invention, the ratio of $\gamma$ crystals to all crystals is not particularly limited as long as the ratio of $\gamma$ crystals to the total amount of $\alpha$ crystals and $\gamma$ crystals described above is satisfied, but it is, for example, 34 to 70%, preferably 34 to 65%, more preferably 34 to 60%, still more preferably 34 to 55%, particularly preferably 35 to 45%, still more preferably 36 to 40% for further improving liquid permeability while maintaining the bubble point, solute rejection rate, or molecular weight cutoff. As one embodiment of the polyamide porous membrane of the present invention, in the case of a microfiltration membrane, the ratio of $\gamma$ crystals to all crystals is preferably 34 to 55%, more preferably 35 to 45%, still more preferably 36 to 40% from the above viewpoint. As one embodiment of the polyamide porous membrane of the present invention, in the case of an ultrafiltration membrane or a nanofiltration membrane, the ratio of $\gamma$ crystals to all crystals is preferably 45 to 70%, more preferably 45 to 65%, still more preferably 50 to 65%, particularly preferably 55 to 65% from the above viewpoint. In the present invention, the ratio of $\gamma$ crystals to all crystals is a value determined by determining the peak area of the crystalline portion and the peak area of $\gamma$ crystals by crystal structure analysis by X-ray diffraction and calculating the ratio of the peak area of $\gamma$ crystals to the peak area of the crystalline portion. The method of crystal structure analysis by X-ray diffraction is as described above.

In the polyamide porous membrane of the present invention, the ratio of $\alpha$ crystals to all crystals is not particularly limited as long as the ratio of $\gamma$ crystals to the total amount of $\alpha$ crystals and $\gamma$ crystals described above is satisfied, but it is, for example, 20 to 66%, preferably 25 to 66%, more preferably 30 to 66%, still more preferably 35 to 66%, still more preferably 45 to 66%, particularly preferably 45 to 60%, still more preferably 50 to 55% for further improving liquid permeability while maintaining the bubble point, solute rejection rate, or molecular weight cutoff. As one embodiment of the polyamide porous membrane of the present invention, in the case of a microfiltration membrane, the ratio of $\alpha$ crystals

to all crystals is preferably 45 to 66%, more preferably 45 to 60%, still more preferably 50 to 55% from the above viewpoint. As one embodiment of the polyamide porous membrane of the present invention, in the case of an ultrafiltration membrane or a nanofiltration membrane, the ratio of $\alpha$ crystals to all crystals is preferably 20 to 50%, more preferably 25 to 45%, still more preferably 25 to 40%, particularly preferably 30 to 40% from the above viewpoint. In the present invention, the ratio of $\alpha$ crystals to all crystals is a value determined by determining the peak area of the crystalline portion and the peak area of $\alpha$ crystals by crystal structure analysis by X-ray diffraction and calculating the ratio of the peak area of $\alpha$ crystals to the peak area of the crystalline portion. The method of crystal structure analysis by X-ray diffraction is as described above.

The crystallinity of $\gamma$ crystals in the polyamide porous membrane of the present invention is not particularly limited as long as the ratio of $\gamma$ crystals to the total amount of $\alpha$ crystals and $\gamma$ crystals described above is satisfied, but it is, for example, 20 to 50%, preferably 20 to 40%, more preferably 20 to 35%, still more preferably 20 to 30%, particularly preferably 20 to 23% for further improving liquid permeability while maintaining the bubble point, solute rejection rate, or molecular weight cutoff. As one embodiment of the polyamide porous membrane of the present invention, in the case of a microfiltration membrane, the crystallinity of $\gamma$ crystals is preferably 20 to 35%, more preferably 20 to 30%, still more preferably 20 to 23% from the above viewpoint. As one embodiment of the polyamide porous membrane of the present invention, in the case of an ultrafiltration membrane or a nanofiltration membrane, the crystallinity of $\gamma$ crystals is preferably 25 to 50%, more preferably 25 to 45%, still more preferably 25 to 40%, particularly preferably 30 to 40% from the above viewpoint. In the present invention, the crystallinity of $\gamma$ crystals is a value determined by determining the peak area of the amorphous portion, the peak area of the crystalline portion, and the peak area of $\gamma$ crystals by crystal structure analysis by X-ray diffraction and calculating the ratio of the peak area of $\gamma$ crystals to the total value of the peak area of the amorphous portion and the peak area of the crystalline portion. The method of crystal structure analysis by X-ray diffraction is as described above.

The crystallinity of the polyamide porous membrane of the present invention is not particularly limited as long as the ratio of $\gamma$ crystals to the total amount of $\alpha$ crystals and $\gamma$ crystals described above is satisfied, but it is, for example, 35 to 75%, preferably 40 to 70%, more preferably 45 to 65%, still more preferably 50 to 63%, particularly preferably 55 to 63%, still more preferably 55 to 58% for further improving liquid permeability while maintaining the bubble point, solute rejection rate, or molecular weight cutoff. In the present invention, the crystallinity is a value determined by determining the peak area of the amorphous portion and the peak area of the crystalline portion by crystal structure analysis by X-ray diffraction and calculating the ratio of the peak area of the crystalline portion to the total value of the peak area of the amorphous portion and the peak area of the crystalline portion, and the method of crystal structure analysis by X-ray diffraction is as described above.

[Shape]

The shape of the polyamide porous membrane of the present invention is not particularly limited but can be selected from any shapes such as a hollow fiber membrane and a flat membrane, but the hollow fiber membrane is suitable in the present invention because the hollow fiber membrane has a large filtration area per unit volume of the module, and the filtration treatment can be efficiently performed.

When the polyamide porous membrane of the present invention is a hollow fiber membrane, the outer diameter thereof is appropriately set according to the application, liquid permeability to be imparted, and the like, but the outer diameter of the porous membrane is 400 $\mu$m or more, preferably 450 to 4,000 $\mu$m, more preferably 500 to 3,500 $\mu$m in the viewpoint of the relationship with the effective membrane area, the membrane strength, the pressure loss of the fluid flowing in the hollow portion, and the buckling pressure when the porous membrane is filled in a module. When the polyamide porous membrane of the present invention has a hollow fiber shape, the inner diameter thereof is not particularly limited, and is, for example, 100 to 3,000 $\mu$m, preferably 200 to 2,500 $\mu$m, more preferably 300 to 2,000 $\mu$m, further preferably 300 to 1,500 $\mu$m. In the present invention, the outer diameter and the inner diameter of the porous membrane are values determined by observing 5 porous membranes at a magnification of 200 times with an optical microscope, measuring the outer diameter and the inner diameter of each porous membrane (both at portions having the maximum diameters), and calculating the average values of the outer diameter and the inner diameter.

The thickness of the polyamide porous membrane of the present invention is appropriately set according to the use and shape of the polyamide porous membrane, liquid permeability to be imparted, and the like, and is, for example, 50 to 600 $\mu$m, preferably 100 to 350 $\mu$m. When the polyamide porous membrane of the present invention has a hollow fiber shape, the thickness thereof is a value calculated by dividing a value obtained by subtracting the inner diameter from the outer diameter by two.

[Liquid Permeability]

The polyamide porous membrane of the present invention satisfies the ratio of $\gamma$ crystals to the total amount of α crystals and γ crystals described above, thereby improving liquid permeation performance. The liquid permeation performance that the polyamide porous membrane of the present invention can have varies depending on the type of the polyamide resin and the pore size of the produced porous membrane and cannot be uniformly defined, but the water permeation amount of the polyamide porous membrane of the present invention is, for example, 0.1 to 800 L/(m²·bar·h), preferably 1 to 800 L/(m²·bar·h), more preferably 50 to 700 L/(m²·bar·h), still more preferably 200 to 700 L/(m²·bar·h), particularly preferably 250 to 600 L/(m²·bar·h), even more preferably 300 to 500 L/(m²·bar·h). As one embodiment of the polyamide porous membrane of the present invention, in the case of a microfiltration membrane, the water permeation amount is preferably 250 to 800 L/(m²·bar·h), more preferably 300 to 800 L/(m²·bar·h), still more preferably 350 to 800 L/(m²·bar·h), particularly preferably 400 to 800 L/(m²·bar·h). As one embodiment of the polyamide porous membrane of the present invention, in the case of an ultrafiltration membrane or a nanofiltration membrane, the water permeation amount is preferably 1 to 200 L/(m²·bar·h), more preferably 50 to 200 L/(m²·bar·h), still more preferably 80 to 100 L/(m²·bar·h).

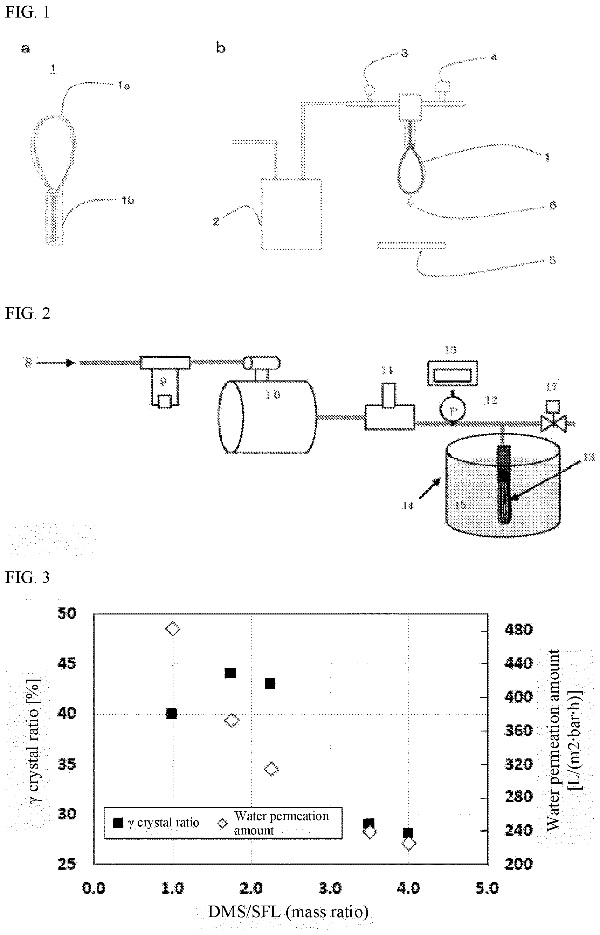

When the polyamide porous membrane of the present invention is a hollow fiber membrane, the water permeation amount is a value measured by internal pressure filtration and is a value measured by the following procedure. First, a module illustrated in Fig. 1a is produced. Specifically, first, 10 hollow fiber membranes are cut into a length of 30 cm, and these pieces are aligned and bundled to prepare a bundle. Next, a nylon hard tube having an outer diameter of 8 mm, an inner diameter of 6 mm, and a length of 50 mm is prepared, and a rubber stopper having a length of about 20 mm is inserted from one end opening of the tube to plug the one end opening. Next, a two-component epoxy resin is injected from the opening of the tube on the side opposite to the side where the rubber stopper has been inserted, so that the space inside the tube is filled with the epoxy resin. Thereafter, the prepared bundle of hollow fiber membranes is bent into a substantially U shape, both end portions of the hollow fiber membranes are thermally sealed so that the epoxy resin will not enter the hollow portions, the bundle is inserted into the tube filled with the epoxy resin until the tips of the end portions come into contact with the rubber stopper, and the epoxy resin is cured in this state. Then, a region on the rubber stopper side of the cured epoxy resin portion is cut together with the tube to produce a module in which hollow portions at both end portions of the hollow fiber membranes are opened.

Next, the module is set in a device shown in Fig. 1b, pure water at 25°C is caused to flow inside the hollow fiber porous membranes of the module for a certain period of time under a pressure of about 3 bar, the volume of the pure water that has permeated to the outside of the hollow fiber porous membranes is determined, and the water permeation amount (L/(m²·bar·h)) is calculated according to the following calculation formula.

$$\text{Water permeation amount} = \text{volume of pure water that has permeated to outside of hollow fiber membrane (L)} / [\text{inner diameter of hollow fiber membrane (m)} \times 3.14 \times \text{effective filtration lenght of hollow fiber membrane (m)} \times 10 \text{ (pieces)} \times \{\text{pressure (bar)}\} \times \text{time (h)}]$$  [Math. 2]

Effective filtration length of porous membrane: The length of a portion of the outer surface of the hollow fiber membrane in the module not covered with the epoxy resin

In the case where the polyamide porous membrane of the present invention is a flat membrane, the water permeation amount is a value measured by dead-end filtration and is a value measured by the following procedure. Using a flat membrane crossflow tester (for example, Sepa-CF flat membrane test cell manufactured by GE Water & Process Technologies) to which a high-pressure pump is connected, a flat membrane-shaped polyamide porous membrane is cut into a predetermined size (19.1 cm × 14.0 cm, effective membrane area in cell: 155 cm²) and fixed to the cell, pure water at 25°C is caused to flow, the permeated pure water under a predetermined pressure is recovered, its volume (L) is measured, and the water permeation amount (L/(m²·bar·h)) is calculated according to the following calculation formula.

$$\text{Water permeation amount} = \text{volume of pure water that has permeated flat membrane (L)} / [\text{area of flat membarane (m}^2) \times \{\text{pressure (bar)}\} \times \text{time (h)}]$$  [Math. 3]

In addition, as one aspect of the polyamide porous membrane of the present invention, the permeation amount of N-methyl-2-pyrrolidone (NMP) is preferably 0.006 to 0.05 L/(m²·bar·h), more preferably 0.01 to 0.04 L/(m²·bar·h), still more preferably 0.012 to 0.03 L/(m²·bar·h), particularly preferably 0.014 to 0.02 L/(m²·bar·h).

When the polyamide porous membrane of the present invention is a hollow fiber membrane, the NMP permeation amount is a value measured by internal pressure filtration and is a value measured by the following procedure. First, 20 hollow fiber porous membranes are cut into a length of 30 cm, and these pieces are aligned and bundled to prepare a bundle. Next, a polybutylene terephthalate (PBT) tube having an outer diameter of 12.7 mm, an inner diameter of 9.5 mm, and a length of 53 mm is prepared, a silicone tube having an inner diameter of 12 mm and a length of about 50 mm is further inserted to about 15 mm into and connected to one end opening of the tube, and a rubber stopper having a length of about 20 mm is inserted into the side of the silicone tube opposite to the side inserted into the PBT tube to plug the one end opening. Next, a two-component epoxy resin is injected from the opening of the connected tube on the side opposite to the side where the rubber stopper is inserted, so that the space inside the tube is filled with the epoxy resin. Thereafter, one end of the prepared bundle of hollow fiber membranes is thermally sealed so that the epoxy resin will not enter the hollow portions, the bundle is inserted into the tube filled with the epoxy resin until the tip of the end portion comes into contact with the rubber stopper, and the epoxy resin is cured in this state. Next, the region on the rubber stopper side of the cured epoxy resin portion is cut together with the tube to open the hollow portions. The same operation is performed for the other end to produce a crossflow module in which hollow portions at both ends of the hollow fiber porous membranes are opened.

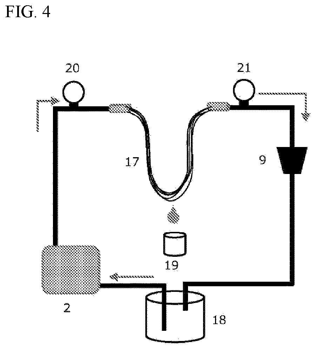

Next, the produced crossflow module is connected to an internal pressure type separation treatment line shown in Fig. 4, and a flowing liquid is continuously allowed to permeate through the crossflow module using a liquid-feeding circulation pump 2. As the flowing liquid, a 50-ppm solution of VB 12 in NMP is used. In the module, the pressure of a primary pressure gauge 20 and the pressure of a secondary pressure gauge 21 are adjusted with a regulator 9 so that the arithmetic average value of the pressure of the primary pressure gauge 20 and the pressure of the secondary pressure gauge 21 will be 20 bar. Of the flowing liquid that permeates through the module, the portion that has permeated through the pores of the hollow fiber porous membranes is recovered as the permeated liquid separated from the flowing liquid, and the remaining portion is allowed to circulate again in the separation treatment line. The permeated liquid that flowed out of the crossflow module from two hours until four hours after the start of circulation is recovered using a pan 19, the mass of the obtained permeated liquid is measured, and the NMP permeation amount $(L/(m^2 \cdot bar \cdot h))$ is calculated from the following formula.

NMP permeation amount = mass of permeated NMP (g)/[inner diameter of hollow fiber porous membrane (m) $\times$ 3.14 $\times$ effective filtration lenght of hollow fiber porous membrane (m) $\times$ 20 (pieces) $\times$ {pressure (bar) $\times$ 1,030 (g/L)} $\times$ time (h)]     [Math. 4]

Effective filtration length of hollow fiber porous membrane: The length of a portion of the outer surface of the hollow fiber porous membrane in the crossflow module not covered with the epoxy resin

Examples of the index for evaluating the membrane separation performance of the polyamide porous membrane of the present invention include the solute rejection rate, bubble point, and molecular weight cutoff. The solute rejection rate is an index for evaluating how much rejection rate can be obtained for an arbitrary solute. The bubble point is an index for evaluating the maximum pore size of the membrane. The molecular weight cutoff is an index for evaluating the size range of pores of the membrane.

[Solute Rejection Rate]

The polyamide porous membrane of the present invention satisfies the ratio of $\gamma$ crystals to the total amount of $\alpha$ crystals and $\gamma$ crystals described above, thereby maintaining the solute rejection rate, thereby having excellent liquid permeability while suppressing deterioration of membrane separation performance. As one aspect of the polyamide porous membrane of the present invention, the VB12 rejection rate is preferably 85% or more, more preferably 87% or more, still more preferably 90% or more. The upper limit of the rejection rate is not particularly limited but is, for example, 100% or less, 95% or less, or 93% or less.

The VB12 rejection rate is a value measured by internal pressure filtration and is a value measured by a measurement procedure similar to the measurement procedure of the NMP permeation amount. The absorbances of the resulting permeated liquid and the flowing liquid at a wavelength of 550 nm are measured using an absorptiometer, and the VB12 rejection rate is calculated from the following formula.

VB12 rejection rate = 100 - (absorbance of permeated liquid/absorbance of flowing liquid) $\times$ 100     [Math. 5]

[Bubble Point]

The lower the bubble point, the higher the liquid permeability, and the lower the bubble point, the lower the membrane separation performance of small substances. The polyamide porous membrane of the present invention satisfies the ratio of $\gamma$ crystals to the total amount of $\alpha$ crystals and $\gamma$ crystals described above, thereby suppressing decrease in the bubble point, thereby having excellent liquid permeability while suppressing deterioration of membrane separation performance. The bubble point of the polyamide porous membrane of the present invention varies depending on the type of the polyamide resin and the pore size of the produced porous membrane and cannot be uniformly defined. For example, in a bubble point test in which air pressure is applied in a liquid having a surface tension of 21 mN/m at 20°C, the initial bubble point is 0.4 MPa or more, and the burst bubble point is 0.5 MPa or more. For example, the initial bubble point is preferably 0.5 to 1.2 MPa, more preferably 0.6 to 1.0 MPa, still more preferably 0.6 to 0.8 MPa. For example, the burst bubble point is preferably 0.6 to 1.2 MPa, more preferably 0.7 to 1.0 MPa, still more preferably 0.7 to 0.9 MPa.

When the polyamide porous membrane of the present invention is a hollow fiber membrane, the initial bubble point and the burst bubble point are values measured by the following procedure using a device shown in the schematic diagram of Fig. 2. First, a hollow fiber membrane mini-module for measuring the initial bubble point and the burst bubble point is produced. Specifically, 10 hollow fiber membranes are cut into a length of 20 cm, these pieces are aligned, bundled, and bent into a U shape, and about 1 cm of the end portions of the hollow fiber membranes on the opening side are heat-sealed to close the hollow portions, thereby preparing a hollow fiber membrane bundle. Next, a soft nylon tube (outer diameter: 8 mm, inner diameter: 6 mm) for air piping having a length of 5 cm is prepared, and one opening thereof is closed by plugging with a silicon stopper. Next, a potting agent (polyurethane resin) is introduced into the nylon tube up to about 4 cm in height with the end side of the nylon tube with the silicon stopper facing downward. Thereafter, the heat-sealed end of the hollow fiber membrane bundle is inserted into the nylon tube, a part of the hollow fiber membrane bundle is immersed in the potting agent, and the hollow fiber membrane bundle is allowed to stand until the potting agent is cured. After curing, a portion of the hollow fiber membrane bundle above the heat-sealed portion is cut to open the hollow portions of the hollow fiber membranes. At this time, whether the potting agent has entered the hollow portions and whether the space between the hollow fiber membranes is filled with the potting agent are visually checked. After confirming that the hollow is maintained without any problem, the module is subjected to measurement of the initial bubble point and the burst bubble point. Next, the initial bubble point and the burst bubble point of the hollow fiber membranes are measured using the device illustrated in the schematic diagram of Fig. 2. Specifically, 2-propanol (surface tension at 20°C: 21 mN/m) is introduced into a glass container 14, and the hollow fiber membrane mini-module 13 prepared above is immersed therein, and the pressure is reduced for several seconds to fill the holes with the liquid. Thereafter, the hollow fiber membrane mini-module 13 immersed in 2-propanol is set as shown in Fig. 2, and air is fed into the hollow fiber membranes at 0.4 MPa/min to increase the pressure. First, the pressure when bubbles are generated from the hollow fiber membranes is checked, and this is taken as the initial bubble point. The pressure is then continuously increased as it is, and the pressure when bubbles are generated from approximately the entire hollow fiber membranes is checked, and this is taken as the burst bubble point.

When the polyamide porous membrane of the present invention is a flat membrane, the initial bubble point and the burst bubble point are values measured by the following procedure. A flat membrane cut into a circle having a diameter of 40 mm or more is immersed in 2-propanol (surface tension at 20°C: 21 mN/m), and the pressure is reduced for several seconds to fill the holes with the liquid. Next, the flat membrane is taken out, and in a state of being wetted with 2-propanol, both surfaces of the flat membrane are sandwiched between an O-ring having a diameter of 40 mm and a mesh, and these are fixed with a resin jig. Thereafter, a pneumatic pipe is connected to one surface of the jig, and in a state where the flat membrane and the jig are immersed in the test liquid, air is fed through the pneumatic pipe to the inside of the flat membrane at 0.4 MPa/min to increase the pressure. First, the pressure when bubbles are generated from the flat membrane is checked, and this is taken as the initial bubble point. The pressure is continuously increased as it is, and the pressure when bubbles are generated from approximately the entire flat membrane is checked, and this is taken as the burst bubble point.

[Molecular Weight Cutoff]

The polyamide porous membrane of the present invention satisfies the ratio of γ crystals to the total amount of α crystals and γ crystals described above, thereby maintaining the molecular weight cutoff, thereby having excellent liquid permeability while suppressing deterioration of membrane separation performance. The molecular weight cutoff of the polyamide porous membrane of the present invention varies depending on the type of the polyamide resin and the pore size of the produced porous membrane and cannot be uniformly defined. The molecular weight cutoff is, for example, about 1 to 1,000 kDa and may be 10 to 500 kDa, 20 to 300 kDa, 30 to 100 kDa, or 30 to 50 kDa. As one aspect of the polyamide porous membrane of the present invention, in the case of an ultrafiltration membrane, the molecular weight cutoff is about 1 to 300 kDa, preferably 5 to 150 kDa, more preferably 10 to 100 kDa. As one aspect of the polyamide porous membrane of the present invention, in the case of a nanofiltration membrane, the molecular weight cutoff is about 0.2 to 1 kDa, preferably 0.4 to 1 kDa, more preferably 0.6 to 1 kDa. In the present invention, the molecular weight cutoff of the polyamide porous membrane is determined by a permeation test using a dextran having a known molecular weight.

[Application]

The polyamide porous membrane of the present invention can be used, for example, as a microfiltration membrane, an ultrafiltration membrane, or a nanofiltration membrane in the fields of semiconductor industry, chemical industry, food industry, pharmaceutical industry, medical product industry, and the like.

In addition, since the polyamide porous membrane of the present invention has resistance to various organic solvents, it can be suitably used for filtration of a liquid to be treated containing an organic solvent as a treatment target.

The polyamide porous membrane of the present invention is preferably used by incorporating the polyamide porous membrane of the present invention into a filtration membrane module described later.

The polyamide porous membrane of the present invention may be provided alone as a free-standing membrane or may have a shape stacked on a support such as a microfiltration membrane and an ultrafiltration membrane. The material of the support is preferably resistant to an organic solvent, and specific examples thereof include polymer materials such as polyamides, polyethylene, polypropylene, polytetrafluoroethylene, polyphenylene sulfide, and polyether ether ketone; and inorganic materials such as sintered metals and ceramics.

2. Method for Producing Polyamide Porous Membrane

A method for producing the polyamide porous membrane of the present invention is not particularly limited as long as a polyamide porous membrane satisfying the ratio of $\gamma$ crystals to the total amount of $\alpha$ crystals and $\gamma$ crystals described above can be produced, but a preferred example thereof is a production method including the following first step and second step.

First Step: A membrane-forming stock solution is prepared by dissolving the polyamide resin at a temperature of 100°C or higher in an organic solvent containing sulfolane and dimethyl sulfone and having a mass ratio of dimethyl sulfone to sulfolane (dimethyl sulfone/sulfolane) of 0.8 to 2.5.

Second Step: The polyamide resin is coagulated to form a membrane by extruding the membrane-forming stock solution into a coagulation bath at 100°C or lower into a predetermined shape.

Hereinafter, each of the first step and the second step will be described in detail.

[First Step]

In the first step, the membrane-forming stock solution is prepared by dissolving the polyamide resin at a temperature of 100°C or higher in the organic solvent containing sulfolane and dimethyl sulfone and having a mass ratio of dimethyl sulfone to sulfolane (dimethyl sulfone/sulfolane) of 0.8 to 2.5. By using such a membrane-forming stock solution in which the polyamide resin is dissolved in the organic solvent containing sulfolane and dimethyl sulfone in the mass ratio described above, it becomes possible to produce a polyamide porous membrane that satisfies the ratio of $\gamma$ crystals to the total amount of $\alpha$ crystals and $\gamma$ crystals described above.

The mass ratio of dimethyl sulfone to sulfolane (dimethyl sulfone/sulfolane) in the membrane-forming stock solution prepared in the first step is preferably 1.0 to 2.5, more preferably 1.0 to 2.3 for more suitably satisfying the ratio of $\gamma$ crystals to the total amount of $\alpha$ crystals and $\gamma$ crystals described above in the polyamide porous membrane to be produced.

The membrane-forming stock solution prepared in the first step may contain an organic solvent other than sulfolane and dimethyl sulfone as necessary as long as the effect of the present invention is not impaired. However, it is desirable that sulfolane and dimethyl sulfone occupy 70 parts by mass or more, preferably 80 parts by mass or more, more preferably 90 parts by mass or more, still more preferably 95 parts by mass or more, still more preferably 100 parts by mass per 100 parts by mass of the total amount of the organic solvent contained in the membrane-forming stock solution prepared in the first step from the viewpoint of more suitably satisfying the ratio of $\gamma$ crystals to the total amount of $\alpha$ crystals and $\gamma$ crystals described above in the polyamide porous membrane to be produced.

The concentration of the polyamide resin in the membrane-forming stock solution is not particularly limited but is, for example, 15 to 40 mass%, preferably 15 to 35 mass%, further preferably 17 to 30 mass%.

When the polyamide resin is dissolved in the organic solvent in the first step, it is necessary to set the temperature of the solvent to 100°C or higher. Specifically, it is desirable to perform dissolution at a temperature 10 to 50°C higher, preferably 20 to 40°C higher than the phase separation temperature of the membrane-forming stock solution to be prepared. The phase separation temperature of the membrane-forming stock solution refers to a temperature at which liquid-liquid phase separation or solid-liquid phase separation by crystallization occurs in the case where a mixture prepared by mixing the polyamide resin and the organic solvent at a sufficiently high temperature is gradually cooled. The phase separation temperature can be measured by using a microscope or the like equipped with a hot stage.

In the first step, the temperature condition when the polyamide resin is dissolved in the organic solvent may be appropriately set in a temperature range of 100°C or higher according to the above-mentioned indices depending on the type of the polyamide resin to be used and the type of the organic solvent and is preferably 120 to 250°C, more preferably 140 to 220°C, further preferably 160 to 200°C.

Additives such as fillers, thickeners, surfactants, crystal nucleating agents, and lubricants may be added to the membrane-forming stock solution as necessary for controlling the pore size of the polyamide porous membrane, improving the performance, and the like.

The membrane-forming stock solution prepared in the first step is subjected to the second step at the same temperature (that is, in a state of 100°C or higher).

Second Step

In the second step, the polyamide resin is coagulated to form a membrane by extruding the membrane-forming stock solution prepared in the first step into a coagulation bath at 100°C or lower into a predetermined shape.

As the coagulation liquid, a conventionally known coagulation liquid can be used. As the coagulation liquid, for example, a coagulation liquid having compatibility with the organic solvent used in the membrane-forming stock solution and high affinity with the polyamide resin, or a coagulation liquid having compatibility with the organic solvent used in the membrane-forming stock solution and low affinity with the polyamide resin can be used.

Specific examples of the coagulation liquid having compatibility with the organic solvent used in the membrane-forming stock solution and high affinity with the polyamide resin include a coagulation liquid containing a solvent that is compatible with the organic solvent used in the membrane-forming stock solution at a temperature of 25°C or lower and dissolves the polyamide resin at a temperature of the boiling point or lower. More specific examples thereof include glycerin, ethylene glycol, diethylene glycol, triethylene glycol, tetraethylene glycol, polyethylene glycol 200, propylene glycol (PG), 1,3-butanediol, sulfolane, NMP, $\gamma$-butyrolactone, $\delta$-valerolactone, and an aqueous solution containing 20 mass% or more of these. Among these, at least one selected from the group consisting of glycerin, PG, diethylene glycol, and polyethylene glycol 200, and an aqueous solution containing these at a ratio of 25 to 75 mass% are preferable; and at least one selected from the group consisting of glycerin, diethylene glycol, tetraethylene glycol, and PG, and an aqueous solution containing at least one of these at a ratio of 40 to 80 mass% (preferably 40 to 60 mass%) are more preferable.

Examples of the coagulation liquid having compatibility with the organic solvent used in the membrane-forming stock solution and low affinity with the polyamide resin include a solvent that is compatible with the organic solvent used in the membrane-forming stock solution at a temperature of 50°C or lower but does not dissolve the polyamide resin at the boiling point or lower or at a temperature of 200°C or lower. More specific examples include water and an aqueous solvent such as an aqueous solution having a water content of 80 mass% or more; lower monohydric alcohols such as 1-propanol, 2-propanol, and isobutanol; glycol ethers such as polyethylene glycol having an average molecular weight of 300 or more, polypropylene glycol having an average molecular weight of 400 or more, diethylene glycol diethyl ether, triethylene glycol monomethyl ether, and propylene glycol monoethyl ether; and glycol acetates such as triacetin and propylene glycol monoethyl ether acetate. Among them, polyethylene glycol having an average molecular weight of 300 to 1,000, polypropylene glycol having an average molecular weight of 400 to 1,000, triacetin, and triethylene glycol monomethyl ether are preferable; polyethylene glycol having an average molecular weight of 300 to 700 is more preferable; and polyethylene glycol having an average molecular weight of 400 to 600 is still more preferable. These solvents may be used singly or in combination of two or more thereof. In the present invention, in the present invention, the average molecular weights of polyethylene glycol and polypropylene glycol are number average molecular weights calculated based on a hydroxyl numbers measured in accordance with JIS K 1557-6: 2009 "Plastics-Polyols for use in the production of polyurethanes- Part 6: Determination of hydroxyl number by NIR spectroscopy".

When a coagulation liquid having compatibility with the organic solvent used in the membrane-forming stock solution and low affinity with the polyamide resin is used as the coagulation liquid, the pore size of the surface of the resulting polyamide porous membrane on the side of the surface in contact with the solvent can be made relatively small. On the other hand, when a coagulation liquid having compatibility with the organic solvent used in the membrane-forming stock solution and high affinity with the polyamide resin is used as the coagulation liquid, the pore size of the surface of the resulting polyamide porous membrane on the side of the surface in contact with the solvent can be made relatively large.

A coagulation liquid having compatibility with the organic solvent used in the membrane-forming stock solution and low affinity with the polyamide resin may be mixed with a coagulation liquid having compatibility with the organic solvent used in the membrane-forming stock solution and high affinity with the polyamide resin. In the case of the mixing, the content of the coagulation liquid having compatibility with the organic solvent used for the membrane-forming stock solution and high affinity with the polyamide resin is, for example, 20 mass% or less, preferably 10 mass% or less.

In the case of forming a hollow fiber membrane as the polyamide porous membrane, the second step may be performed by using a double-tube nozzle having a double tube structure for producing hollow fibers, discharging an internal coagulation liquid from an inner nozzle while discharging the membrane-forming stock solution from an outer annular nozzle, and immersing the membrane-forming stock solution in the coagulation bath. At this time, for the internal coagulation liquid and the coagulation bath, the coagulation liquid having compatibility with the organic solvent used in the membrane-forming stock solution and high affinity with the polyamide resin, or the coagulation liquid having compatibility with the organic solvent used in the membrane-forming stock solution and low affinity with the polyamide resin described above can be used. For the internal coagulation liquid and the coagulation bath, only the coagulation liquid having compatibility with the organic solvent used in the membrane-forming stock solution and high affinity with the polyamide resin may be used, or only the coagulation liquid having compatibility with the organic solvent used in the membrane-forming stock solution and low affinity with the polyamide resin may be used. One of the coagulation liquid having compatibility with the organic solvent used in the membrane-forming stock solution and high affinity with the polyamide resin and the coagulation liquid having compatibility with the organic solvent used in the membrane-forming stock solution and low affinity with the polyamide resin may be used for the internal coagulation liquid, and the other may be used for the coagulation bath. In particular, it is preferable that one of the coagulation liquid having compatibility with the organic solvent used in the membrane-forming stock solution and high affinity with the polyamide resin and the coagulation liquid having compatibility with the organic solvent used in the membrane-forming stock solution and low affinity with the polyamide resin be used for the internal coagulation liquid, and the other be used for the coagulation bath. In particular, when a coagulation liquid (preferably at least one selected from the group consisting of glycerin, PG, diethylene glycol, and polyethylene glycol 200, or an aqueous solution containing them at a ratio of 25 to 75 mass%, more preferably at least one selected from the group consisting of glycerin, diethylene glycol, tetraethylene glycol, and PG, or an aqueous solution containing at least one of them at a ratio of 40 to 80 mass% (preferably 40 to 60 mass%). Hereinafter, these are referred to as "coagulation liquid A") having compatibility with the organic solvent used for the membrane-forming stock solution and high affinity with the polyamide resin is used as the coagulation bath, and a coagulation liquid (preferably at least one selected from the group consisting of polyethylene glycol having an average molecular weight of 300 to 1,000, polypropylene glycol having an average molecular weight of 400 to 1,000, triacetin, and triethylene glycol monomethyl ether, more preferably polyethylene glycol having an average molecular weight of 300 to 700, still more preferably polyethylene glycol having an average molecular weight of 400 to 600. Hereinafter, these are referred to as "coagulation liquid B") having compatibility with the organic solvent used for the membrane-forming stock solution and low affinity with the polyamide resin is used as the internal coagulation liquid, a hollow fiber membrane having pores having a relatively small pore size on the inner surface and pores having a relatively large pore size on the outer surface is obtained.

Specifically, the internal coagulation liquid used when preparing a polyamide hollow fiber porous membrane (corresponding to a microfiltration membrane) having an initial bubble point of 0.4 MPa or more and a burst bubble point of 0.5 MPa or more is preferably a mixture of 30 to 50 mass% of the coagulation liquid A and 50 to 70 mass% of the coagulation liquid B, more preferably a mixture of 35 to 45 mass% of the coagulation liquid A and 55 to 65 mass% of the coagulation liquid B.

In addition, the internal coagulation liquid used when preparing a polyamide hollow fiber porous membrane (corresponding to an ultrafiltration membrane or a nanofiltration membrane) having a VB12 rejection rate measured by the above method of 85 to 95% or a molecular weight cutoff of 1 to 1,000 kDa is preferably a mixture of more than 0 to 40 mass% of the coagulation liquid A and 60 to less than 100 mass% of the coagulation liquid B or the coagulation liquid B alone, more preferably a mixture of more than 0 to 20 mass% of the coagulation liquid A and 80 to less than 100 mass% of the coagulation liquid B or the coagulation liquid B alone.

Since the internal coagulation liquid used for forming a hollow fiber membrane passes through a double annular nozzle, it is preferable that the internal coagulation liquid does not contain water having a boiling point equal to or lower than the temperature of the double annular nozzle.

As the double-tube nozzle for producing hollow fibers, a spinneret having a double-tube structure that is used when a core-sheath type composite fiber is produced in melt spinning can be used. The diameter of the outer annular nozzle and the diameter of the inner nozzle of the double-tube nozzle for producing hollow fibers may be appropriately set according to the inner diameter and the outer diameter of the hollow fiber membrane.

The flow rate at the time of discharging the membrane-forming stock solution from the outer annular nozzle of the double-tube nozzle for producing hollow fibers is not particularly limited because it depends on the slit width thereof but is, for example, 2 to 30 g/min, preferably 3 to 20 g/min, further preferably 5 to 15 g/min. The flow rate of the internal coagulation liquid is appropriately set in consideration of the diameter of the inner nozzle of the double-tube nozzle for producing hollow fibers, the type of the internal liquid to be used, the flow rate of the membrane-forming stock solution, and the like and is 0.1 to 2 times, preferably 0.2 to 1 times, further preferably 0.4 to 0.7 times the flow rate of the membrane-forming stock solution.

When a flat membrane is formed as the polyamide porous membrane, in the second step, one of the coagulation liquid having compatibility with the organic solvent used in the membrane-forming stock solution and low affinity with the polyamide resin and the coagulation liquid having compatibility with the organic solvent used in the membrane-forming stock solution and high affinity with the polyamide resin may be used for the coagulation bath, and the membrane-forming stock solution may be extruded into a predetermined shape and immersed in the coagulation bath.

In the second step, the temperature of the coagulation bath is 100°C or lower and is preferably -20 to 100°C, more preferably 0 to 60°C, still more preferably 2 to 20°C, particularly preferably 2 to 10°C. The suitable temperature of the coagulation bath may vary depending on the organic solvent used for the membrane-forming stock solution, the composition of the coagulation liquid, and the like, but in general, there is a tendency that thermally induced phase separation preferentially proceeds by setting the temperature to a lower temperature and that non-solvent phase separation preferentially proceeds by setting the temperature to a higher temperature. That is, in the case of producing a hollow fiber membrane having pores having a relatively small pore size on the luminal surface, it is preferable to set the coagulation bath to a low temperature in order to increase the pore size of the luminal surface, and it is preferable to set the coagulation bath to a high temperature in order to make the pore size of the luminal surface denser and to coarsen the internal structure.

In the case of forming a hollow fiber membrane as the polyamide porous membrane, the temperature of the internal coagulation liquid may be about the set temperature of the double-tube nozzle but is, for example, 120 to 250°C, preferably 160 to 230°C, more preferably 180 to 220°C.

By performing the second step in this manner, the membrane-forming stock solution is coagulated in the coagulation bath, and a polyamide porous membrane satisfying the ratio of γ crystals to the total amount of α crystals and γ crystals is formed.

After the second step, a step of extracting and removing the coagulation liquid phase-separated in the polyamide porous membrane can be included. In order to extract and remove the coagulation liquid phase-separated in the polyamide porous membrane, the polyamide porous membrane formed in the second step may be immersed in an extractant, or the polyamide porous membrane formed in the second step may be subjected to showering with the extractant. As the extractant used for extraction and removal, an extractant that is inexpensive, has a low boiling point, and can be easily separated after extraction due to the difference in boiling point or the like is preferable, and examples thereof include water, glycerin, methanol, ethanol, isopropanol, acetone, diethyl ether, hexane, petroleum ether, and toluene. Among them, water, methanol, ethanol, isopropanol, and acetone are preferable; and water, methanol, and isopropanol are more preferable. When an organic solvent insoluble in water, such as a phthalic acid ester and a fatty acid, is to be extracted, isopropyl alcohol, petroleum ether, or the like can be suitably used. When the coagulation liquid is extracted and removed by immersing the polyamide porous membrane in the extractant, the time for immersing the polyamide porous membrane in the extractant is not particularly limited, but it is, for example, 0.2 hours to 2 months, preferably 0.5 hours to 1 month, further preferably 2 hours to 10 days. In order to effectively extract and remove the coagulation liquid remaining in the polyamide porous membrane, the extractant may be replaced or stirred.

Further, a step of drying and removing the extractant can be included after the extraction and removal of the coagulation liquid. The extractant can be dried and removed by a known drying treatment such as natural drying, hot air drying, drying under reduced pressure, and vacuum drying. In the step of drying and removing the extractant, the dried may be performed while performing stretching at a draft ratio of preferably 1.1 to 2.0 times, more preferably 1.2 to 1.5 times in order to improve liquid permeability.

3. Filtration Membrane Module

The polyamide porous membrane of the present invention is accommodated in a module case having an inlet for liquid to be treated, a permeated liquid outlet, and the like and is used as a filtration membrane module.

When the polyamide porous membrane of the present invention has a hollow fiber shape, the polyamide porous membrane is used as a hollow fiber membrane module.

Specifically, the hollow fiber membrane module is only required to have a structure in which the hollow fiber polyamide porous membrane of the present invention is bundled and accommodated in a module case, and one or both ends of the hollow fiber polyamide porous membrane are sealed and fixed with a potting agent. It is sufficient that the hollow fiber membrane module is provided with an opening connected to a flow path passing through the outer wall surface side of the hollow fiber polyamide porous membrane and an opening connected to a hollow portion of the hollow fiber polyamide porous membrane as an inlet of the liquid to be treated or an outlet of the filtrate.

The shape of the hollow fiber membrane module is not particularly limited but may be a dead-end module or a crossflow module. Specific examples thereof include a dead-end module in which a hollow fiber membrane bundle is folded into a U shape and filled, and an end portion of the hollow fiber polyamide porous membrane bundle is sealed and then cut to be opened; a dead-end module in which a hollow opening portion at one end of a hollow fiber polyamide porous membrane bundle is closed by thermal sealing or the like, the bundle is filled straight, and the opened end portion of the hollow fiber polyamide porous membrane bundle is sealed and then cut to be opened; a dead-end module in which a hollow fiber polyamide porous membrane bundle is filled straight, both end portions of the hollow fiber polyamide porous membrane bundle are sealed, and only one end portion is cut to expose an opening portion; and a crossflow module in which a hollow fiber polyamide porous membrane bundle is filled straight, both end portions of the hollow fiber polyamide porous membrane bundle are sealed, sealed portions at both ends of the hollow fiber polyamide porous membrane bundle are cut, and two flow paths are formed on a side surface of a filter case.

The filling ratio of the hollow fiber polyamide porous membrane to be inserted into the module case is not particularly limited, but for example, the volume of the hollow fiber polyamide porous membrane including the volume of the hollow portion relative to the volume inside the module case is 15 to 75 vol%, preferably 25 to 65 vol%, still more preferably 35 to 55 vol%. By satisfying such a filling ratio, the filling operation of the hollow fiber polyamide porous membranes into the module case can be facilitated while securing a sufficient filtration area, and the potting agent can easily flow between the hollow fiber polyamide porous membranes.

The potting agent used for producing the hollow fiber membrane module is not particularly limited, but when the hollow fiber membrane module is used for treatment of an organic solvent, it is desirable that the hollow fiber membrane module has resistance to organic solvents. Examples of such a potting agent include a polyamide, a silicone resin, a polyurethane resin, an epoxy resin, a melamine resin, polyethylene, polypropylene, a phenolic resin, a polyimide, and a polyurea resin. Among these potting agents, those showing less shrinkage and swelling when cured and having a hardness that is not too high are preferable, and suitable examples thereof include a polyamide, a silicone resin, an epoxy resin, and polyethylene. These potting agents may be used singly or in combination of two or more thereof.

The material of the module case used for the hollow fiber membrane module is not particularly limited, and examples thereof include a polyamide, a polyester, polyethylene, polypropylene, polyvinylidene fluoride, polytetrafluoroethylene, polyvinyl chloride, a polysulfone, polyethersulfone, a polycarbonate, a polyarylate, and polyphenylene sulfide. Among them, a polyamide, polyethylene, polypropylene, polytetrafluoroethylene, a polycarbonate, a polysulfone, and polyethersulfone are preferable, and a polyamide, polyethylene, polypropylene, and polytetrafluoroethylene are more preferable.

When the polyamide porous membrane of the present invention has a flat membrane shape, the polyamide porous membrane is used as a sheet-type module such as a plate-and-frame and a stack module, a spiral module, a rotating flat membrane module, a pleated module, or the like.

The filtration membrane module using the polyamide porous membrane of the present invention is used in ultrafiltration or nanofiltration applications for removal of foreign substances in a solvent, concentration of useful components in a solvent, solvent recovery, purification of water, and the like in fields such as semiconductor industry, chemical industry, food industry, pharmaceutical industry, and medical product industry.

In one aspect of the filtration membrane module using the polyamide porous membrane of the present invention, the filtration membrane module is suitably used for filtration in which the treatment target is liquid to be treated containing an organic solvent.

EXAMPLES

Hereinafter, the present invention will be described in detail with reference to examples and comparative examples. However, the present invention is not limited to examples.

1. Measurement Method

[Outer Diameter and Inner Diameter of Hollow Fiber Porous Membrane]

With an optical microscope, 5 hollow fiber porous membranes were observed at a magnification of 200 times, the outer diameter and the inner diameter of each hollow fiber porous membrane (both at portions having the maximum diameters) were measured, and the average values of the outer diameter and the inner diameter were determined.

[Crystal Structure Analysis of Hollow Fiber Porous Membrane by X-ray Diffraction]

- Device: RINT-TTR III (CBO) X-ray diffractometer manufactured by Rigaku Corporation
- Pretreatment: A piece of a hollow fiber porous membrane was cut out perpendicularly to the length direction and fixed to a sample plate for pole measurement with double-sided tape. The sample plate for pole measurement was disposed so as to be parallel to the optical axis direction when the length direction of the sample is $2\theta = 0°$.
- Measurement Method: WAXD in the reflection mode by the $2\theta/\theta$ method
- Measurement Conditions: Conditions were set to Cu K$\alpha$ X-rays (1.54 Å), 50 kV and 300 mA, a thin film, a standard multi-purpose sample stage/a sample plate for pole measurement, the parallel beam method, long slits for receiving-side Soller slits, slits: DS/SS/RS = 1.0 mm/1.0 mm/1.0 mm, longitudinal limiting slit = 10 mm, scan range: $2\theta = 2°$ to 60°, scan speed: 2°/min, and step: 0.02°.
- Analysis Method: Analysis was performed in the range of $2\theta = 5°$ to 36° by the multiple peak separation method (profile fitting with the pseudo-Voigt function). Specific analysis conditions were as follows.

1) The background was defined as an area under a straight line connecting a corrected intensity at 2θ = 8° (calculated as the average intensity at 2θ = 7.5° to 8.5°) and a corrected intensity at 2θ = 36° (calculated as the average intensity at 2θ = 35.5° to 36.5°).

2) To the halo pattern formed by the amorphous component, a Gaussian function in contact with the peak shape at 2θ = 15 to 17 ° and 2θ = 27 to 29° was assigned. At this time, the center of the halo pattern was set to 2θ = 19 to 21°, and the full width at half maximum was set to about 10.

3) To the diffraction line formed by the crystal component, a symmetric pseudo-Voigt function was assigned to match the peak top and the waveform. Profile fitting was performed with the parameters of the halo pattern being fixed. The 2θ position, the half-value width, the height, and the contribution ratio between the Gaussian function and the Lorentz function of the peak were set by fitting. Jade+ 9.8 was used for fitting.

4) The peak area of the crystalline portion, the peak area of α crystals, and the peak area of γ crystals were determined by the multiple peak separation method. In addition, the ratio of γ crystals to the total amount of α crystals and γ crystals was calculated according to the following calculation formula. Further, the crystallinity (the ratio of the peak area of the crystalline portion to the total value of the peak area of the amorphous portion and the peak area of the crystalline portion), the ratio of α crystals to all crystals (the ratio of the peak area of α crystals to the peak area of the crystalline portion), the ratio of γ crystal to all crystals (the ratio of the peak area of γ crystals to the total value of the peak area of the crystalline portion), and the crystallinity of γ crystals (the ratio of the peak area of γ crystals to the total value of the peak area of the amorphous portion and the peak area of the crystalline portion) were also calculated.

[Math. 6]

$$\text{Ratio of } \gamma \text{ crystals to total amount of } \alpha \text{ crystals and } \gamma \text{ crystals (\%)}$$
$$= \{\text{peak area of } \gamma \text{ crystals}/(\text{peak area of } \gamma \text{ crystals} + \text{peak area of } \alpha \text{ crystals})\} \times 100$$

[Water Permeation Amount of Hollow Fiber Porous Membrane]

First, a module illustrated in Fig. 1a was produced. Specifically, first, 10 hollow fiber porous membranes were cut into a length of 30 cm, and these pieces were aligned and bundled to prepare a bundle. Next, a nylon hard tube having an outer diameter of 8 mm, an inner diameter of 6 mm, and a length of 50 mm was prepared, and a rubber stopper having a length of about 20 mm was inserted from one end opening of the tube to plug the one end opening. Next, a two-component epoxy resin was injected from the opening of the tube on the side opposite to the side where the rubber stopper has been inserted, so that the space inside the tube was filled with the epoxy resin. Thereafter, the prepared bundle of hollow fiber membranes was bent into a substantially U shape, both end portions of the hollow fiber porous membranes were thermally sealed so that the epoxy resin would not enter the hollow portions, the bundle was inserted into the tube filled with the epoxy resin until the tips of the end portions came into contact with the rubber stopper, and the epoxy resin was cured in this state. Then, a region on the rubber stopper side of the cured epoxy resin portion was cut together with the tube to produce a module in which hollow portions at both end portions of the hollow fiber porous membranes were opened.

Next, the module was set in a device shown in Fig. 1b, pure water at 25°C was caused to flow inside the hollow fiber porous membranes of the module for a certain period of time under a pressure of about 3 bar, the volume of the pure water that had permeated to the outside of the hollow fiber porous membranes was determined, and the water permeation amount (L/(m²·bar·h)) was calculated according to the following calculation formula.

Water permeation amount = volume of pure water that has permeated to outside of hollow fiber membrane (L)/[inner diameter of hollow fiber membrane (m) × 3.14 × effective filtration lenght of hollow fiber membrane (m) × 10 (pieces) × {pressure (bar)} × time (h)]     [Math. 7]

Effective filtration length of porous membrane: The length of a portion of the outer surface of the hollow fiber porous membrane in the module not covered with the epoxy resin

[Initial Bubble Point and Burst Bubble Point of Hollow Fiber Porous Membrane]

First, a porous membrane mini-module for measuring the initial bubble point and the burst bubble point was produced. Specifically, 10 hollow fiber porous membranes were cut into a length of 20 cm, these pieces were aligned, bundled, and bent into a U shape, and about 1 cm of the end portions of the hollow fiber porous membranes on the opening side were heat-sealed to close the hollow portions, thereby preparing a hollow fiber porous membrane bundle. Next, a soft nylon tube (outer diameter: 8 mm, inner diameter: 6 mm) for air piping having a length of 5 cm was prepared, and one opening thereof was closed by plugging with a silicon stopper. Next, a potting agent (polyurethane resin) was introduced into the nylon tube up to about 4 cm in height with the end side of the nylon tube with the silicon stopper facing downward. Thereafter, the heat-sealed end of the hollow fiber porous membrane bundle was inserted into the nylon tube, a part of the hollow fiber porous membrane bundle was immersed in the potting agent, and the hollow fiber membrane bundle was allowed to stand until the potting agent was cured. After curing, a portion of the hollow fiber porous membrane bundle above the heat-sealed portion was cut to open the hollow portions of the hollow fiber porous membranes. At this time, whether the potting agent had entered the hollow portions and whether the space between the hollow fiber porous membranes was filled with the potting agent were visually checked. After confirming that the hollow was maintained without any problem, the module was subjected to measurement of the initial bubble point and the burst bubble point.

Next, the initial bubble point and the burst bubble point of the hollow fiber porous membranes were measured using the device illustrated in the schematic diagram of Fig. 2. In the measurement of the bubble point, it is necessary to fill the pores of the hollow fiber porous membranes with liquid. Therefore, liquid (2-propanol (surface tension at 20°C: 21 mN/m)) used in the test was introduced into the glass container 14, and the porous membrane mini-module 13 prepared above was immersed therein, and the pressure was reduced for several seconds to fill the holes with the liquid. Next, the porous membrane mini-module 13 immersed in the test liquid was set as shown in Fig. 2, and air is fed into the hollow fiber porous membranes at 0.4 MPa/min to increase the pressure. First, the pressure when bubbles are generated from the hollow fiber porous membranes was checked, and this was taken as the initial bubble point. The pressure was continuously increased as it was, and the pressure when bubbles were generated from approximately the entire hollow fiber porous membranes was checked, and this was taken as the burst bubble point.

[VB12 Rejection Rate and NMP Permeation Amount of Hollow Fiber Porous Membrane]

Into a length of 30 cm, 20 hollow fiber porous membranes were cut, and these pieces were aligned and bundled to prepare a bundle. Next, a PBT tube having an outer diameter of 12.7 mm, an inner diameter of 9.5 mm, and a length of 53 mm was prepared, a silicone tube having an inner diameter of 12 mm and a length of about 50 mm was further inserted to about 15 mm into and connected to one end opening of the tube, and a rubber stopper having a length of about 20 mm was inserted into the side of the silicone tube opposite to the side inserted into the PBT tube to plug the one end opening. Next, a two-component epoxy resin was injected from the opening of the connected tube on the side opposite to the side where the rubber stopper was inserted, so that the space inside the tube was filled with the epoxy resin. Thereafter, one end of the prepared bundle of hollow fiber membranes was thermally sealed so that the epoxy resin would not enter the hollow portions, the bundle was inserted into the tube filled with the epoxy resin until the tip of the end portion came into contact with the rubber stopper, and the epoxy resin was cured in this state. Next, the region on the rubber stopper side of the cured epoxy resin portion was cut together with the tube to open the hollow portions. The same operation was performed for the other end to produce a crossflow module in which hollow portions at both ends of the hollow fiber porous membranes were opened.

Next, the crossflow module was connected to an internal pressure type separation treatment line shown in Fig. 4, and a flowing liquid was continuously allowed to permeate through the crossflow module using the liquid-feeding circulation pump 2. As the flowing liquid, a 50-ppm solution of VB12 (cyanocobalamin, guaranteed reagent, manufactured by Kanto Chemical Co., Inc.) in NMP was used. In the module, the pressure of the primary pressure gauge 20 and the pressure of the secondary pressure gauge 21 were adjusted with the regulator 9 so that the arithmetic average value of the pressure of the primary pressure gauge 20 and the pressure of the secondary pressure gauge 21 would be 20 bar. Of the flowing liquid that permeated through the module, the portion that had permeated through the pores of the separation membranes was recovered as the permeated liquid separated from the flowing liquid, and the remaining portion was allowed to circulate again in the separation treatment line. The permeated liquid that flowed out of the crossflow module from two hours until four hours after the start of circulation was recovered using the pan 19, the mass of the obtained permeated liquid was measured, and the NMP permeation amount was calculated from the following formula.

NMP permeation amount = mass of permeated NMP (g)/[inner diameter of hollow fiber porous membrane (m) $\times$ 3.14 $\times$ effective filtration lenght of hollow fiber porous membrane (m) $\times$ 20 (pieces) $\times$ {pressure (bar) $\times$ 1,030 (g/L)} $\times$ time (h)]     [Math. 8]

Effective filtration length of hollow fiber porous membrane: The length of a portion of the outer surface of the hollow fiber porous membrane in the crossflow module not covered with the epoxy resin

In addition, the absorbances of the resulting permeated liquid and the flowing liquid at a wavelength of 550 nm were measured using an absorptiometer, and the VB12 rejection rate was calculated from the following formula.

$$\text{VB12 rejection rate} = 100 - (\text{absorbance of permeated liquid/absorbance of flowing liquid}) \times 100 \qquad \text{[Math. 9]}$$

[Molecular Weight Cutoff (MWCO) of Hollow Fiber Porous Membrane]

Into a length of 30 cm, 10 hollow fiber porous membranes were cut, and these pieces were aligned and bundled to prepare a bundle. Next, a nylon hard tube having an outer diameter of 8 mm, an inner diameter of 6 mm, and a length of 50 mm was prepared, and a rubber stopper having a length of about 20 mm was inserted from one end opening of the tube to plug the one end opening. Next, a two-component epoxy resin was injected from the opening of the tube on the side opposite to the side where the rubber stopper has been inserted, so that the space inside the tube was filled with the epoxy resin. Thereafter, one end of the prepared hollow fiber porous membranes was thermally sealed, the membranes were inserted into the tube filled with the epoxy resin until the tip of the end portion came into contact with the rubber stopper, and the epoxy resin was cured in this state. Next, the region on the rubber stopper side of the cured epoxy resin portion was cut together with the tube to open the hollow portions of the hollow fiber porous membranes. The same operation was performed for the other end to produce a crossflow module in which hollow portions at both ends of the hollow fiber porous membranes were opened.

Next, the crossflow module was connected to an internal pressure type separation treatment line shown in Fig. 4, and a flowing liquid was continuously allowed to permeate through the crossflow module using the liquid-feeding circulation pump 2. As the flowing liquid, an aqueous solution containing 0.5 wt%, 0.2 wt%, 0.2 wt%, and 0.4 wt% of 4 types of dextrans (molecular weights: 10 kDa, 40 kDa, 70 kDa, and 500 kDa), respectively, was used. In the module, the pressure of the primary pressure gauge 20 and the pressure of the secondary pressure gauge 21 are adjusted with the regulator 9 so that the arithmetic average value of the pressure of the primary pressure gauge 20 and the pressure of the secondary pressure gauge 21 will be 1 bar. Of the liquid that permeates through the module, the portion that has permeated through the pores of the separation membranes is recovered as the permeated liquid separated from the flowing liquid, and the remaining portion is allowed to circulate again in the separation treatment line. The permeated liquid flowing out of the crossflow module after a lapse of two hours from the start of circulation was recovered with the pan 19, the dextran concentrations in the permeated liquid and the flowing liquid were measured by high performance liquid chromatography, and the solute rejection rate at each molecular weight was calculated according to the following formula. Each result was plotted on a graph showing the molecular weight on the horizontal axis and the rejection rate on the vertical axis, and the molecular weight at the intersection of the obtained approximate curve and the rejection rate of 90% was defined as MWCO.

$$\text{Solute rejection rate (\%)} = \{(\text{flowing concentration - permeated liquid concentration})/\text{stock solution concentration}\} \times 100 \qquad \text{[Math. 10]}$$

2. Test Example

[Example 1]

At 180°C, 290 g of polyamide 6 chips (A1030BRT manufactured by Unitika Ltd., relative viscosity: 3.53), 355 g of dimethyl sulfone (manufactured by Tokyo Chemical Industry Co., Ltd.), and 355 g of sulfolane (manufactured by Tokyo Chemical Industry Co., Ltd.) (DMS/SFL (mass ratio) = 1.0) were stirred for 1.5 hours and dissolved, and the stirring speed was reduced to defoam the solution for 1 hour, thereby preparing a membrane-forming stock solution. The membrane-forming stock solution was fed via a metering pump to a spinneret kept at 200°C, and a mixed liquid of polyethylene glycol 400 (PEG 400) and glycerin (60 parts by mass of PEG 400 and 40 parts by mass of glycerin as a weight ratio) was caused to flow as an internal coagulation liquid. The extruded membrane-forming stock solution was put into a coagulation bath of a 60-mass% aqueous PG solution at 5°C, and cooled and solidified to form a polyamide porous membrane. The wound polyamide porous membrane was immersed in water for 24 hours to perform solvent extraction (washing) and then dried by passing the membrane through a hot air dryer (inside temperature: 130°C) without being stretched to provide a polyamide hollow fiber porous membrane. The obtained polyamide hollow fiber porous membrane had an outer diameter of 503 $\mu$m and an inner diameter of 272 $\mu$m.

[Example 2]

A polyamide hollow fiber porous membrane was provided in the same manner as in Example 1 except that, in the preparation of the membrane-forming stock solution, 290 g of polyamide 6 chips (A1030BRT manufactured by Unitika Ltd., relative viscosity: 3.53), 452 g of dimethyl sulfone (manufactured by Tokyo Chemical Industry Co., Ltd.), and 258 g of sulfolane (manufactured by Tokyo Chemical Industry Co., Ltd.) (DMS/SFL (mass ratio) = 1.8) were stirred at 180°C for 1.5 hours and dissolved, and the stirring speed was reduced to defoam the solution for 1 hour, thereby preparing a membrane-forming stock solution. The obtained polyamide hollow fiber porous membrane had an outer diameter of 495 μm and an inner diameter of 274 μm.

[Example 3]

A polyamide hollow fiber porous membrane was provided in the same manner as in Example 1 except that, in the preparation of the membrane-forming stock solution, 290 g of polyamide 6 chips (A1030BRT manufactured by Unitika Ltd., relative viscosity: 3.53), 492 g of dimethyl sulfone (manufactured by Tokyo Chemical Industry Co., Ltd.), and 218 g of sulfolane (manufactured by Tokyo Chemical Industry Co., Ltd.) (DMS/SFL (mass ratio) = 2.3) were stirred at 180°C for 1.5 hours and dissolved, and the stirring speed was reduced to defoam the solution for 1 hour, thereby preparing a membrane-forming stock solution. The obtained polyamide hollow fiber porous membrane had an outer diameter of 502 μm and an inner diameter of 274 μm.

[Comparative Example 1]

A polyamide hollow fiber porous membrane was provided in the same manner as in Example 1 except that, in the preparation of the membrane-forming stock solution, 290 g of polyamide 6 chips (A1030BRT manufactured by Unitika Ltd., relative viscosity: 3.53), 552 g of dimethyl sulfone (manufactured by Tokyo Chemical Industry Co., Ltd.), and 158 g of sulfolane (manufactured by Tokyo Chemical Industry Co., Ltd.) (DMS/SFL (mass ratio) = 3.5) were stirred at 180°C for 1.5 hours and dissolved, and the stirring speed was reduced to defoam the solution for 1 hour, thereby preparing a membrane-forming stock solution. The obtained polyamide hollow fiber porous membrane had an outer diameter of 484 μm and an inner diameter of 261 μm.

[Comparative Example 2]

A polyamide hollow fiber porous membrane was provided in the same manner as in Example 1 except that, in the preparation of the membrane-forming stock solution, 290 g of polyamide 6 chips (A1030BRT manufactured by Unitika Ltd., relative viscosity: 3.53), 568 g of dimethyl sulfone (manufactured by Tokyo Chemical Industry Co., Ltd.), and 142 g of sulfolane (manufactured by Tokyo Chemical Industry Co., Ltd.) (DMS/SFL (mass ratio) = 4.0) were stirred at 180°C for 1.5 hours and dissolved, and the stirring speed was reduced to defoam the solution for 1 hour, thereby preparing a membrane-forming stock solution. The obtained polyamide hollow fiber porous membrane had an outer diameter of 478 μm and an inner diameter of 267 μm.

[Example 4]

At 180°C, 300 g of polyamide 6 chips (A1030BRT manufactured by Unitika Ltd., relative viscosity: 3.53), 467 g of dimethyl sulfone (manufactured by Tokyo Chemical Industry Co., Ltd.), and 233 g of sulfolane (manufactured by Tokyo Chemical Industry Co., Ltd.) (DMS/SFL (mass ratio) = 2.0) were stirred for 1.5 hours and dissolved, and the stirring speed was reduced to defoam the solution for 1 hour, thereby preparing a membrane-forming stock solution. The membrane-forming stock solution was fed via a metering pump to a spinneret kept at 220°C, and PEG 400 was caused to flow as an internal coagulation liquid. The extruded membrane-forming stock solution was put into a coagulation bath of a 60-mass% aqueous PG solution at 5°C, and cooled and solidified to form a polyamide porous membrane. The wound polyamide porous membrane was immersed in water for 24 hours to perform solvent extraction (washing) and then dried by passing the membrane through a hot air dryer (inside temperature: 130°C) while being stretched at a draft ratio of 1.3 to provide a polyamide hollow fiber porous membrane. The obtained polyamide hollow fiber porous membrane had an outer diameter of 900 μm and an inner diameter of 400 μm.

[Example 5]

A polyamide hollow fiber porous membrane was obtained in the same manner as in Example 4 except that the amount of dimethyl sulfone (manufactured by Tokyo Chemical Industry Co., Ltd.) was changed to 500 g and that the amount of sulfolane (manufactured by Tokyo Chemical Industry Co., Ltd.) was changed to 200 g (DMS/SFL (mass ratio) = 2.5) in the preparation of the membrane-forming stock solution. The obtained polyamide hollow fiber porous membrane had an outer diameter of 897 $\mu$m and an inner diameter of 402 $\mu$m.

[Comparative Example 3]

A polyamide hollow fiber porous membrane was obtained in the same manner as in Example 4 except that the amount of dimethyl sulfone (manufactured by Tokyo Chemical Industry Co., Ltd.) was changed to 525 g and that the amount of sulfolane (manufactured by Tokyo Chemical Industry Co., Ltd.) was changed to 175 g (DMS/SFL (mass ratio) = 3.0) in the preparation of the membrane-forming stock solution. The obtained polyamide hollow fiber porous membrane had an outer diameter of 892 $\mu$m and an inner diameter of 396 $\mu$m.

[Example 6]

At 180°C, 230 g of polyamide 6 chips (A1030BRT manufactured by Unitika Ltd., relative viscosity: 3.53), 513 g of dimethyl sulfone (manufactured by Tokyo Chemical Industry Co., Ltd.), and 257 g of sulfolane (manufactured by Tokyo Chemical Industry Co., Ltd.) (DMS/SFL (mass ratio) = 2.0) were stirred for 1.5 hours and dissolved, and the stirring speed was reduced to defoam the solution for 1 hour, thereby preparing a membrane-forming stock solution. The membrane-forming stock solution was fed via a metering pump to a spinneret kept at 170°C, and a mixed liquid of PEG 400 and glycerin (80 parts by mass of PEG 400 and 20 parts by mass of glycerin as a weight ratio) was caused to flow as an internal coagulation liquid. The extruded membrane-forming stock solution was put into a coagulation bath of a 60-mass% aqueous PG solution at 5°C, and cooled and solidified to form a polyamide porous membrane. The wound polyamide porous membrane was immersed in water for 24 hours to perform solvent extraction (washing) and then dried by passing the membrane through a hot air dryer (inside temperature: 130°C) without being stretched to provide a polyamide hollow fiber porous membrane. The obtained polyamide hollow fiber porous membrane had an outer diameter of 800 $\mu$m and an inner diameter of 400 $\mu$m.

[Comparative Example 4]

A polyamide hollow fiber porous membrane was obtained in the same manner as in Example 6 except that the amount of dimethyl sulfone (manufactured by Tokyo Chemical Industry Co., Ltd.) was changed to 578 g and that the amount of sulfolane (manufactured by Tokyo Chemical Industry Co., Ltd.) was changed to 193 g (DMS/SFL (mass ratio) = 3.0) in the preparation of the membrane-forming stock solution. The obtained polyamide hollow fiber porous membrane had an outer diameter of 790 $\mu$m and an inner diameter of 395 $\mu$m.

3. Results of Evaluation of Physical Properties of Porous Membrane

Tables 1 to 3 show the compositions of the membrane-forming stock solution and the internal coagulation liquid used for producing each polyamide hollow fiber porous membrane, the results of measurement of the physical properties of each polyamide hollow fiber porous membrane, and the like. Fig. 3 shows, for each of the polyamide hollow fiber porous membranes of Examples 1 to 3 and Comparative Examples 1 and 2, a diagram obtained by plotting the mass ratio of dimethyl sulfone to sulfolane (DMS/SFL) in the membrane-forming stock solution used as a horizontal axis and plotting the ratio of $\gamma$ crystals to the total amount of $\alpha$ crystals and $\gamma$ crystals and the water permeation amount of each polyamide hollow fiber porous membrane as a vertical axis.

[Table 1]

| | Polyamide | | Solvent | | | Composition of internal coagulation liquid | Peak area of crystalline portion | Peak area of amorphous portion | Crystallinity | Peak area of α crystals | Peak area of γ crystals | Ratio of α crystals to all crystals | Ratio of γ crystals to all crystals | Crystallinity of γ crystals | Ratio γ/(α+γ) of γ crystals to total amount of α crystals and γ crystals | IBP | BBP | Water permeation amount |
|---|---|---|---|---|---|---|---|---|---|---|---|---|---|---|---|---|---|---|
| | Type | Mass ratio | DMS mass ratio | SFL mass ratio | DMS/SFL | | [cps/deg] | [cps/deg] | [%] | [cps/deg] | [cps/deg] | [%] | [%] | [%] | [%] | [MPa] | [MPa] | L/(m²·bar·h) |
| Example 1 | PA6 | 29 | 35.5 | 35.5 | 1.0 | GLY: PEG400 = 4:6 | 1064838 | 806089 | 57 | 584823 | 390372 | 55 | 37 | 21 | 40 | 0.70 | 0.70 | 482.3 |
| Example 2 | PA6 | 29 | 452 | 25.8 | 1.8 | | 1231806 | 975942 | 56 | 623441 | 483960 | 51 | 39 | 22 | 44 | 0.70 | 0.70 | 372.5 |
| Example 3 | PA6 | 29 | 49.2 | 21.8 | 2.3 | | 1215047 | 954617 | 56 | 627241 | 470184 | 52 | 39 | 22 | 43 | 0.70 | 0.80 | 314.5 |
| Comparative Example 1 | PA6 | 29 | 55.2 | 15.8 | 3.5 | | 1099579 | 852015 | 56 | 728234 | 294472 | 66 | 27 | 15 | 29 | 0.80 | 0.90 | 239.4 |
| Comparative Example 2 | PA6 | 29 | 56.8 | 14.2 | 4.0 | | 1012028 | 833622 | 55 | 669300 | 256139 | 66 | 25 | 14 | 28 | 0.70 | 0.80 | 224.9 |

[Table 2]

| | Polyamide | | Solvent | | | Composition of internal coagulation liquid | Peak area of crystalline portion | Peak area of amorphous portion | Crystallinity | Peak area of α crystals | Peak area of γ crystals | Ratio of α crystals to all crystals | Ratio of γ crystals to all crystals | Crystallinity of γ crystals | Ratio γ/(α+γ) of γ crystals to total amount of α crystals and γ crystals | VB12 rejection rate | NMP permeation amount |
|---|---|---|---|---|---|---|---|---|---|---|---|---|---|---|---|---|---|
| | Type | Mass ratio | DMS mass ratio | SFL mass ratio | DMS/SFL | | [cps/deg] | [cps/deg] | [%] | [cps/deg] | [cps/deg] | [%] | [%] | [%] | [%] | [%] | L/(m²·bar·h) |
| Example 4 | PA6 | 30 | 46.7 | 233 | 2.0 | PEG400 | 2837710 | 2056069 | 58 | 973217 | 1565244 | 34 | 55 | 32 | 62 | 90 | 0.014 |
| Example 5 | PA6 | 30 | 50.0 | 20.0 | 2.5 | PEG400 | 2711824 | 1884488 | 59 | 1029550 | 1258339 | 38 | 46 | 27 | 55 | 90 | 0.012 |
| Comparative Example 3 | PA6 | 30 | 52.5 | 17.5 | 3.0 | PEG400 | 2691868 | 1870620 | 59 | 1709525 | 842005 | 64 | 31 | 18 | 33 | 91 | 0.005 |

[Table 3]

| | Polyamide | | Solvent | | | Composition of internal coagulation liquid | Peak area of crystalline portion | Peak area of amorphous portion | Crystallinity | Peak area of $\alpha$ crystals | Peak area of $\gamma$ crystals | Ratio of $\alpha$ crystals to all crystals | Ratio of $\gamma$ crystals to all crystals | Crystallinity of $\gamma$ crystals | Ratio $\gamma/(\alpha+\gamma)$ of $\gamma$ crystals to total amount of $\alpha$ crystals and $\gamma$ crystals | Molecular weight cutoff (MWCO) | Water permeation amount |
|---|---|---|---|---|---|---|---|---|---|---|---|---|---|---|---|---|---|
| | Type | Mass ratio | DMS mass ratio | SFL mass ratio | DMS/SFL | | [cps/deg] | [cps/deg] | [%] | [cps/deg] | [cps/deg] | [%] | [%] | [%] | [%] | [kDa] | L/(m²·bar·h) |
| Example 6 | PA6 | 23 | 51.3 | 25.7 | 2.0 | GLY: PEG400 = 2:8 | 1538521 | 918560 | 63 | 425351 | 956722 | 28 | 62 | 39 | 69 | 35 | 90 |
| Comparative Example 4 | PA6 | 23 | 57.8 | 19.3 | 3.0 | GLY: PEG400 = 2:8 | 1781365 | 1091804 | 62 | 1041499 | 490117 | 58 | 28 | 17 | 32 | 37 | 34 |

In Tables 1 to 3, "PA6" stands for polyamide 6, "DMS" stands for dimethyl sulfone, "SFL" stands for sulfolane, "GLY" stands for glycerin, "PEG400" stands for polyethylene glycol 400, "IBP" stands for the initial bubble point, "BBT" stands for the burst bubble point, "VB12" stands for vitamin $B_{12}$, and "NMP" stands for N-methyl-2-pyrrolidone.

As can be seen from Table 1 and Fig. 3, when a membrane-forming stock solution containing sulfolane and dimethyl sulfone and satisfying a mass ratio thereof (DMS/SFL) of 0.8 to 2.5 was used, the ratio of $\gamma$ crystals to the total amount of $\alpha$ crystals and $\gamma$ crystals in the resulting polyamide hollow fiber porous membrane was 38% or more (Examples 1 to 3). On the other hand, when a membrane-forming stock solution having a mass ratio (DMS/SFL) of 3.5 or more was used, the ratio of $\gamma$ crystals to the total amount of $\alpha$ crystals and $\gamma$ crystals in the resulting polyamide hollow fiber porous membrane was less than 30%. In the polyamide hollow fiber porous membrane in which the ratio of $\gamma$ crystals to the total amount of $\alpha$ crystals and $\gamma$ crystals was 38% or more, the water permeation amount could be increased while maintaining the bubble point at a high value, and the polyamide hollow fiber porous membrane was also excellent in liquid permeability (Examples 1 to 3). On the other hand, in the polyamide hollow fiber porous membrane in which the ratio of $\gamma$ crystals to the total amount of $\alpha$ crystals and $\gamma$ crystals was less than 30%, the bubble point could be maintained at a high value, but the water permeation amount was small, so that the polyamide hollow fiber porous membrane was poor in terms of liquid permeability (Comparative Examples 1 and 2).

As can be seen from Table 2, when a membrane-forming stock solution containing sulfolane and dimethyl sulfone and satisfying a mass ratio thereof (DMS/SFL) of 0.8 to 2.5 was used, the ratio of $\gamma$ crystals to the total amount of $\alpha$ crystals and $\gamma$ crystals in the resulting polyamide hollow fiber porous membrane was 55% or more (Examples 4 and 5). On the other hand, when a membrane-forming stock solution having a mass ratio (DMS/SFL) of 3.0 was used, the ratio of $\gamma$ crystals to the total amount of $\alpha$ crystals and $\gamma$ crystals in the resulting polyamide hollow fiber porous membrane was 33% (Comparative Example 3). In the polyamide hollow fiber porous membrane in which the ratio of $\gamma$ crystals to the total amount of $\alpha$ crystals and y crystals was 55% or more, the NMP permeation amount could be remarkably increased while maintaining the VB12 rejection rate at a high value, and the polyamide hollow fiber porous membrane was excellent in liquid permeability (Examples 4 and 5). On the other hand, in the polyamide hollow fiber porous membrane in which the ratio of y crystals to the total amount of $\alpha$ crystals and $\gamma$ crystals was 33%, the VB12 rejection rate could be maintained at a high value, but the NMP permeation amount was small, so that the polyamide hollow fiber porous membrane was poor in terms of liquid permeability (Comparative Example 3).

As can be seen from Table 3, when a membrane-forming stock solution containing sulfolane and dimethyl sulfone and satisfying a mass ratio thereof (DMS/SFL) of 0.8 to 2.5 was used, the ratio of $\gamma$ crystals to the total amount of $\alpha$ crystals and $\gamma$ crystals in the resulting polyamide hollow fiber porous membrane was 69% (Example 6). On the other hand, when a membrane-forming stock solution having a mass ratio (DMS/SFL) of 3.0 was used, the ratio of $\gamma$ crystals to the total amount of $\alpha$ crystals and $\gamma$ crystals in the resulting polyamide hollow fiber porous membrane was 32% (Comparative Example 4). In the polyamide hollow fiber porous membrane in which the ratio of $\gamma$ crystals to the total amount of $\alpha$ crystals and $\gamma$ crystals was 69%, the water permeation amount could be remarkably increased while maintaining a low molecular weight cutoff, and the polyamide hollow fiber porous membrane was excellent in liquid permeability (Example 6). On the other hand, in the polyamide hollow fiber porous membrane in which the ratio of $\gamma$ crystals to the total amount of $\alpha$ crystals and $\gamma$ crystals was 32%, a low molecular weight cutoff could be maintained, but the water permeation amount was small, so that the polyamide hollow fiber porous membrane was poor in terms of liquid permeability (Comparative Example 4).

DESCRIPTION OF REFERENCE SIGNS

1: Module
1a: Hollow fiber membrane
1b: Tube filled with cured epoxy resin
2: Liquid feeding pump
3: Pressure gauge
4: Pressure relief valve
5: Pan
8: Air inlet
9: Regulator
10: Pressure intensifying tank
11: Speed controller
12: Pressure sensor
13: Hollow fiber membrane mini-module
14: Glass container
15: 2-Propanol solution
16: Digital pressure display
17: Crossflow module

18: Flowing liquid tank
19: Pan
20: Primary pressure gauge
21: Secondary pressure gauge

**Claims**

1. A polyamide porous membrane formed of a polyamide resin, wherein in structural analysis by X-ray diffraction, a ratio of a γ crystal to a total amount of an α crystal and the γ crystal is 38% or more.

2. The polyamide porous membrane according to claim 1, wherein crystallinity of the γ crystal is 20 to 50% in structural analysis by X-ray diffraction.

3. The polyamide porous membrane according to claim 1, wherein a ratio of the γ crystal to all crystals is 34 to 70% in structural analysis by X-ray diffraction.

4. The polyamide porous membrane according to claim 1, wherein the polyamide porous membrane has a hollow fiber membrane shape.

5. The polyamide porous membrane according to claim 1, wherein the polyamide resin is polyamide 6.

6. A filtration membrane module comprising the polyamide porous membrane according to any one of claims 1 to 5 housed in a module case.

7. A method for producing a polyamide porous membrane, comprising a first step and a second step below:

   the first step of preparing a membrane-forming stock solution by dissolving a polyamide resin at a temperature of 100°C or higher in an organic solvent containing sulfolane and dimethyl sulfone and having a mass ratio of dimethyl sulfone to sulfolane (dimethyl sulfone/sulfolane) of 0.8 to 2.5; and
   the second step of extruding the membrane-forming stock solution into a coagulation bath at 100°C or lower in a predetermined shape to coagulate the polyamide resin into a membrane shape.

8. The production method according to claim 7 used as a method for producing a polyamide porous membrane having a hollow fiber membrane shape,

   wherein the second step is a step of using a double-tube nozzle having a double tube structure for producing a hollow fiber, discharging an internal coagulation liquid from an inner nozzle while discharging the membrane-forming stock solution from an outer annular nozzle, and immersing the membrane-forming stock solution in the coagulation bath, and
   a coagulation liquid having compatibility with the organic solvent used in the membrane-forming stock solution and low affinity with the polyamide resin is used for at least one of the internal coagulation liquid and the coagulation bath.

FIG. 1

FIG. 2

FIG. 3

FIG. 4

**EP 4 385 609 A1**

## INTERNATIONAL SEARCH REPORT

| International application No. |
|---|
| **PCT/JP2022/029976** |

### A. CLASSIFICATION OF SUBJECT MATTER

***B01D 61/02***(2006.01)i; ***B01D 63/02***(2006.01)i; ***B01D 69/08***(2006.01)i; ***B01D 71/56***(2006.01)i; ***C08J 5/22***(2006.01)i
FI: B01D71/56; B01D61/02; B01D69/08; B01D63/02; C08J5/22

According to International Patent Classification (IPC) or to both national classification and IPC

### B. FIELDS SEARCHED

Minimum documentation searched (classification system followed by classification symbols)

B01D61/02; B01D63/02; B01D69/08; B01D71/56; C08J5/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2016-68004 A (UNITIKA LTD) 09 May 2016 (2016-05-09)<br>claims 1-5, paragraphs [0012], [0035]-[0062] | 1-8 |
| A | WO 2017/061502 A1 (DAICEL-EVONIK LTD.) 13 April 2017 (2017-04-13)<br>claims 1-4, paragraphs [0046]-[0047] | 1-8 |
| A | WO 2014/030585 A1 (UNITIKA LTD) 27 February 2014 (2014-02-27)<br>paragraph [0039] | 1-8 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 September 2022** | **04 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/029976**

| Patent document cited in search report | | | Publication date (day/month/year) | Patent family member(s) | | | Publication date (day/month/year) |
|---|---|---|---|---|---|---|---|
| JP | 2016-68004 | A | 09 May 2016 | (Family: none) | | | |
| WO | 2017/061502 | A1 | 13 April 2017 | US | 2019/0048153 | A1 | |
| | | | | claims 1-4, paragraphs [0060]-[0064] | | | |
| | | | | EP | 3467015 | A1 | |
| | | | | CN | 108137828 | A | |
| | | | | KR | 10-2018-0066125 | A | |
| | | | | TW | 201726788 | A | |
| WO | 2014/030585 | A1 | 27 February 2014 | US | 2015/0209735 | A1 | |
| | | | | paragraph [0073] | | | |
| | | | | EP | 2889078 | A1 | |
| | | | | KR | 10-2015-0046138 | A | |
| | | | | CN | 104640619 | A | |
| | | | | TW | 201417998 | A | |

Form PCT/ISA/210 (patent family annex) (January 2015)

**REFERENCES CITED IN THE DESCRIPTION**

**Patent documents cited in the description**

- JP 2009226338 A
- JP 2014218563 A
- JP 2007007490 A
- JP 2016068005 A